(19) **Europäisches Patentamt**
**European Patent Office**
**Office européen des brevets**

(11) **EP 4 386 583 A1**

(12) # EUROPEAN PATENT APPLICATION

(43) Date of publication:
**19.06.2024 Bulletin 2024/25**

(21) Application number: **23194056.0**

(22) Date of filing: **29.08.2023**

(51) International Patent Classification (IPC):
**G06F 17/11** (2006.01)  **G06Q 10/04** (2023.01)
**G06T 7/00** (2017.01)

(52) Cooperative Patent Classification (CPC):
**G06F 17/11; G06Q 10/04; G06T 7/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.12.2022 JP 2022198142**

(71) Applicant: **Kabushiki Kaisha Toshiba**
**Minato-ku**
**Tokyo 105-0023 (JP)**

(72) Inventors:
• **TATSUMURA, Kosuke**
  **Tokyo (JP)**
• **HAMAKAWA, Yohei**
  **Tokyo (JP)**
• **YAMASAKI, Masaya**
  **Tokyo (JP)**
• **HIDAKA, Ryo**
  **Tokyo (JP)**

(74) Representative: **Marks & Clerk LLP**
**15 Fetter Lane**
**London EC4A 1BW (GB)**

(54) **INFORMATION PROCESSING DEVICE, INFORMATION PROCESSING METHOD, AND COMPUTER PROGRAM**

(57) An information processing device (14) according to an embodiment is a device that executes processing on data. The device (14) generates a combination optimization problem based on the data under a predetermined constraint condition. The device (14) solves the generated combination optimization problem while allowing the constraint condition not to be satisfied, and calculates a solution to the combination optimization problem obtained by solving the combination optimization problem. The device (14) generates a constraint violation control signal in a case where the solution does not satisfy the constraint condition. The device (14) executes first processing on the data. The first processing is predetermined on the basis of the constraint violation control signal. The device (14) outputs the data on which the first processing has been executed.

## FIG.7

**Description**

FIELD

Embodiments described herein relate generally to an information processing device, an information processing method, and a computer program.

BACKGROUND

Optimization of systems in various fields of application, such as control, finance, communication, logistics, and chemistry, is often mathematically reduced to combination optimization problems. An information processing system that realizes various information processing functions such as recognition, determination, and planning by solving a combination optimization problem and improves efficiency of such functions has been proposed.

The combination optimization problem is to define a cost function using a plurality of decision variables (for example, discrete variables) representing a state of a system to be optimized as arguments and solve a combination of values of a plurality of decision variables that minimizes the defined cost function.

The state of the system expressed by the decision variables is referred to as a solution. In the combination optimization problem, as the number of decision variables increases, the number of states that can be taken as a solution increases exponentially. An increase in the number of states that can be taken as a solution is referred to as a combination explosion.

The combinational optimization of selecting one optimum solution from all solution candidates is known as a problem that is difficult to calculate. Performing large-scale combinatorial optimization in a short time is still a challenge.

The constrained combination optimization problem is to impose a certain constraint condition on a solution and find a solution that minimizes a cost function under the constraint condition. A solution satisfying the constraint condition is referred to as a constraint satisfaction solution. The solution satisfying the constraint condition may also be referred to as an executable solution. A solution that does not satisfy the constraint condition is referred to as a constraint violation solution. The solution that does not satisfy the constraint condition may be referred to as an inexecutable solution.

An information processing system that solves a conventional constrained combination optimization problem does not output a constraint violation solution as a solution or discards the constraint violation solution even if the constraint violation solution is found. However, even the constraint violation solution may include an effective solution for improving performance or efficiency of the information processing function.

In the related art, a technique for efficiently outputting an effective solution for improving performance or efficiency of an information processing function in constraint violation solution, or a technique for improving performance or efficiency of an information processing function using a constraint violation solution is not known.

Therefore, in the conventional technology, even when the constraint violation solution includes an effective solution for improving performance or efficiency of the information processing function, the performance or the efficiency of the information processing function cannot be improved.

BRIEF DESCRIPTION OF THE DRAWINGS

FIG. 1 is a diagram illustrating a model of an Ising problem;
FIG. 2 is a diagram illustrating internal variables used by a simulated bifurcation algorithm;
FIG. 3 is a flowchart illustrating a flow of processing of a simulated bifurcation machine;
FIG. 4 is a diagram illustrating a configuration of an information processing system including an Ising machine;
FIG. 5 is a diagram illustrating a configuration of an information processing system including a simulated bifurcation machine;
FIG. 6 is a diagram illustrating a configuration of an object tracking system;
FIG. 7 is a diagram illustrating a configuration of an object tracking device;
FIG. 8 is a diagram illustrating a configuration of an object tracking unit together with a solver unit and a storage unit;
FIG. 9 is a diagram illustrating an example of a plurality of decision variables included in a combination optimization problem;
FIG. 10 is a diagram illustrating a plurality of coefficients included in a combination optimization problem;
FIG. 11 is a diagram illustrating a set of solutions of a cost function and a set of solutions satisfying a constraint condition;
FIG. 12 is a flowchart illustrating a flow of processing of the object tracking device;
FIG. 13 is a diagram illustrating a data flow graph of the object tracking device;

FIG. 14 is a flowchart illustrating a flow of processing of an arbitration unit;

FIG. 15 is a view illustrating a boundary box and a solution of a (k-1)-th frame;

FIG. 16 is a view illustrating a boundary box and a solution of a k-th frame;

FIG. 17 is a view illustrating a boundary box and a solution of a (k+1)-th frame;

FIG. 18 is a diagram illustrating a constraint satisfaction portion identified in a k-th frame;

FIG. 19 is a diagram illustrating processing of a formulation unit according to a first modification;

FIG. 20 is a diagram illustrating processing of an arbitration unit according to a second modification;

FIG. 21 is a diagram illustrating a solution to a first combination optimization problem;

FIG. 22 is a diagram illustrating a solution to a second combination optimization problem;

FIG. 23 is a diagram illustrating a boundary box in a case where the solutions of FIGS. 21 and 22 are obtained; and

FIG. 24 is a diagram illustrating a hardware configuration of a host unit.

DETAILED DESCRIPTION

An information processing device according to an embodiment executes processing on data. The device is configured to generate a combination optimization problem based on the data under a predetermined constraint condition. The device is configured to solve the generated combination optimization problem while allowing the constraint condition not to be satisfied, and calculates a solution to the combination optimization problem obtained by solving the combination optimization problem. The device is configured to generate a constraint violation control signal in a case where the solution does not satisfy the constraint condition. The device is configured to execute first processing on the data. The first processing is predetermined on the basis of the constraint violation control signal. The device is configured to output the data on which the first processing has been executed.

Premise

First, terms and techniques that are the premise of the description of the embodiments will be described.

The combination optimization problem is to define a cost function using a plurality of decision variables (for example, discrete variables) representing a state of a system to be optimized as arguments and solve a combination of values of a plurality of decision variables that minimizes the defined cost function. The cost function includes a plurality of decision variables representing the state of the system as arguments, and is a linear or higher function of the decision variables. For example, the cost function is expressed by a linear function or a quadratic function of a plurality of decision variables. The cost function may be a cubic or higher function of the decision variables. In other words, the cost function is a function of summing a plurality of terms. Each of the terms is a function that multiplies one or more and a predetermined number or less of the decision variables by a coefficient.

The state of the system expressed by the decision variables is referred to as a solution. A whole set of solutions that can be taken by a state of a system is referred to as a solution space. A solution that gives the minimum value of the cost function is referred to as an exact solution. A solution that gives a value close to the minimum value of the cost function is referred to as a good solution.

The exact solution is to find an exact solution that gives a minimum value of a cost function of a combination optimization problem, and to ensure that the solution is an exact solution.

The heuristic solution is to find an exact solution that gives the minimum value of the cost function or a good solution that gives a value close to the minimum value of the cost function for a combination optimization problem. A heuristic solution is also referred to as a heuristic solution. The heuristic solution has no guarantee of an index representing the accuracy of the solution, that is, how close the heuristic solution gives a value to the minimum value of the cost function. The heuristic solution method can output a solution with practically significant accuracy in a shorter solving time than the exact solution method.

The calculation amount of the solution to the combination optimization problem is the amount of operation required to obtain a solution, for example, the number of times of product-sum operation or the like. The solving time required to obtain a solution to the combination optimization problem depends not only on the amount of calculation but also on the configuration of the computer machine that processes the calculation. For example, the higher the computational parallelism and the operating frequency of the computer machine, the shorter the solving time.

The quadratic unconstrained binary optimization (QUBO) problem is an unconstrained quadratic optimization problem in which the decision variable is binary. In the QUBO problem, each of terms included in the cost function is represented by a quadratic expression or a linear expression of the decision variable. The QUBO problem in a narrow definition is a binary variable with a decision variable of zero or one. In the embodiment, the QUBO problem represents a problem of definition in a narrow sense in which the decision variable is zero or one. In the narrow-sense definition QUBO problem, the decision variable may also be referred to as a bit variable.

The cost function of the QUBO problem is expressed by $H_{total\_QUBO}$ of Expression (1).

$$H_{total\_QUBO} = \sum_{i=1}^{N}\sum_{j=1}^{N} Q_{ij}b_i b_j = 2\sum_{i=1}^{N}\sum_{i<j}^{N} Q_{ij}b_i b_j + \sum_{i=1}^{N} Q_{ii}b_i \qquad \cdots (1)$$

N is an integer of two or more and represents the number of decision variables. i and j represent an integer of one or more and N or less. $b_i$ is zero or one, and represents the i-th decision variable among the N decision variables. $b_j$ is zero or one, and represents the j-th decision variable among the N decision variables. $Q_{ij}$ represents coefficients of the i-th row and the j-th column included in the coefficient matrix (Q) of N×N. Note that $Q_{ij} = Q_{ji}$. $Q_{ii}$ is a coefficient included in the i-th row and the i-th column of the coefficient matrix (Q), and is a coefficient multiplied by the first-order term of the i-th decision variable. $Q_{ii}$ is referred to as a bias coefficient.

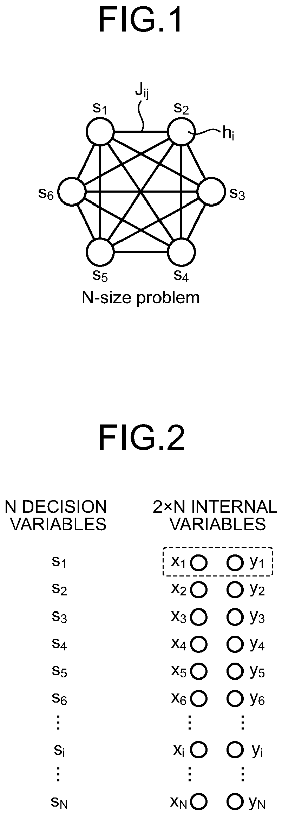

FIG. 1 is a diagram illustrating a model of an Ising problem. The Ising problem is a problem of searching a ground state of an Ising model. The Ising problem is one of the QUBO problems. The decision variable of the Ising problem represents a discrete variable of -1 or + 1.

The cost function of the Ising problem is expressed by $H_{total\_Ising}$ of Expression (2).

$$H_{total\_Ising} = -\frac{1}{2}\sum_{i=1}^{N}\sum_{j=1}^{N} J_{ij}\, s_i s_j + \sum_{i=1}^{N} h_i s_i \qquad \cdots (2)$$

N is an integer of two or more and represents the number of decision variables. i and j represent an integer of one or more and N or less. $s_i$ is -1 or +1, and represents the i-th decision variable among the N decision variables. $S_j$ is -1 or + 1, and represents the j-th decision variable among the N decision variables. $J_{ij}$ represents coefficients of the i-th row and the j-th column included in the coefficient matrix (J) of N×N. Note that $J_{ij} = J_{ji}$. $h_i$ is a coefficient multiplied by a first-order term of the i-th decision variable. $h_i$ is referred to as a bias coefficient.

The QUBO problem in which the decision variable is $s_i$ corresponds to the problem of the ground state search of the Ising model, which is one of the magnetic body models in the statistical mechanics. Therefore, $s_i$ may also be referred to as a spin variable. Moreover, N, which is the number of decision variables, may also be referred to as the number of spins. In addition, $H_{total\_Ising}$ may also be referred to as Ising energy. The vector represented by the N $s_i$s having the minimum value of $H_{total\_Ising}$ may be referred to as a ground state (ground spin arrangement).

The cost function of the QUBO problem and the cost function of the Ising problem differ only in the value of the constant. Therefore, the QUBO problem and the Ising problem are the same as a combination optimization problem. That is, the QUBO problem and the Ising problem can be mutually converted, for example, the Ising problem and the QUBO problem are mutually converted by Expressions (3-1), (3-2), (3-3), and (3-4).

$$s_i = 2b_i - 1 \qquad \cdots (3\text{-}1)$$

$$J_{ij} = -\frac{Q_{ij}}{2} \ (i \neq j) \qquad \cdots (3\text{-}2)$$

$$J_{ii} = 0 \qquad \cdots (3\text{-}3)$$

$$h_i = \sum_{j=1}^{N} \frac{Q_{ij}}{2} \qquad \cdots (3\text{-}4)$$

QUBO and Ising problems are known to be NP-complete. That is, many NP-hard problems can be converted into a QUBO problem or an Ising problem in polynomial time. Therefore, many practical combination optimization problems can be converted into the QUBO problem or the Ising problem.

The Ising machine is a device that solves an Ising problem. Many Ising machines solve Ising problems with heuristic solutions. Ising machines of various principles based on electronics, optics, quantum mechanics, statistical mechanics, and the like have been proposed. Many Ising machines can output an exact solution or a good solution in a short time.

The simulated bifurcation algorithm is an algorithm for solving a combination optimization problem. The simulated bifurcation algorithm is a heuristic solution algorithm.

Simulated bifurcation algorithms are disclosed in, for example: Hayato Goto, Kosuke Tatsumura and Alexander R. Dixon, "Combinatorial optimization by simulating adiabatic bifurcations in nonlinear Hamiltonian systems," Science Advances 5, eaav2372, 2019; Hayato Goto, Kotaro Endo, Masaru Suzuki, Yoshisato Sakai, Taro Kanao, Yohei Hamakawa, Ryo Hidaka, Masaya Yamasaki and Kosuke Tatsumura, "High-performance combinatorial optimization based on classical mechanics", Science Advances 7, eabe7953, 2021; JP 2019-159566 A; JP 2021-043667 A; JP 2021-043589 A; and JP 2021-060864 A. The simulated bifurcation algorithm is also referred to as a quantum inspired algorithm because it has been discovered with an idea from a quantum mechanical optimization method based on the quantum adiabatic theorem. The simulated bifurcation algorithm can solve a combination optimization problem in which the cost function is a quadratic function of a plurality of decision variables. The simulated bifurcation algorithm can also solve a combination optimization problem in which the cost function is a cubic or higher function of a plurality of decision variables, that is, a higher order binary optimization (HUBO) problem. For example, a simulated bifurcation algorithm that solves the HUBO problem is disclosed in JP 2021-043667 A. Moreover, the simulated bifurcation algorithm can also solve a combination optimization problem including variables of continuous values in some or all of a plurality of decision variables. A simulated bifurcation algorithm that solves a combination optimization problem including variables of continuous values in some or all of a plurality of decision variables is disclosed in JP 2021-043589 A.

The simulated bifurcation machine is a calculation apparatus that executes processing according to the simulated bifurcation algorithm. A simulated bifurcation machine that solves a QUBO problem or an Ising problem is an example of an Ising machine. In the present embodiment, the simulated bifurcation machine solves the Ising problem.

FIG. 2 is a diagram illustrating internal variables used by the simulated bifurcation algorithm.

When solving a combination optimization problem in which a cost function is represented using N decision variables ($s_1$ to $s_N$), the simulated bifurcation algorithm uses N position variables ($x_1$ to $x_N$) and N momentum variables ($y_1$ to $y_N$) as internal variables. That is, the simulated bifurcation algorithm uses $2 \times N$ internal variables.

N position variables ($x_i$) correspond to N decision variables ($s_i$) on a one-to-one basis. That is, the i-th position variable ($x_i$) among the N position variables corresponds to the i-th decision variable ($s_i$) among the N decision variables. N momentum variables ($y_i$) correspond to N decision variables ($s_i$) on a one-to-one basis. That is, the i-th momentum variable ($y_i$) among the N momentum variables corresponds to the i-th decision variable ($s_i$) among the N decision variables.

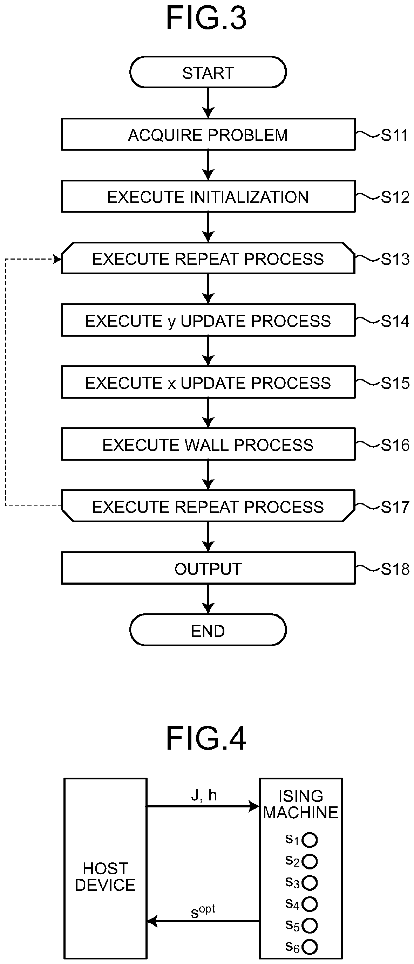

FIG. 3 is a flowchart illustrating a flow of processing of the simulated bifurcation machine. The simulated bifurcation machine executes processing according to the simulated bifurcation algorithm in the flow illustrated in FIG. 3.

First, in S11, the simulated bifurcation machine acquires the Ising problem. Specifically, the simulated bifurcation machine acquires J, which is a matrix including $N \times N$ coefficients, and h including N bias coefficients.

Subsequently, in S12, the simulated bifurcation machine initializes $2 \times N$ internal variables, that is, N position variables ($x_1$ to $x_N$) and N momentum variables ($y_1$ to $y_N$). The simulated bifurcation machine may acquire both or one of the initial values of the N position variables ($x_1$ to $x_N$) and the initial values of the N momentum variables ($y_1$ to $y_N$) from the outside. Moreover, the simulated bifurcation machine may generate the initial values of the N position variables ($x_1$ to $x_N$) and the initial values of the N momentum variables ($y_1$ to $y_N$) by a random number generated by a random number generation circuit, or may set the initial values to predetermined values. Note that, since the simulated bifurcation machine is heuristic, even in the same problem, when at least one of the initial values of the N position variables ($x_1$ to $x_N$) and the initial values of the N momentum variables ($y_1$ to $y_N$) is different, a different good solution may be output.

Subsequently, the simulated bifurcation machine repeats the processing of S14 to S16 a preset number of times (loop processing between S13 and S17). The processing from S14 to S16 is a time evolution processing for time evolution of the N position variables ($x_1$ to $x_N$) and the N momentum variables ($y_1$ to $y_N$).

In S14, the simulated bifurcation machine executes a y update processing of updating each of the N momentum variables ($y_1$ to $y_N$). In the update processing of the i-th momentum variable ($y_i$) in the y update processing, the simulated bifurcation machine updates the i-th momentum variable ($y_i$) by the N position variables ($x_1$ to $x_N$), the N coefficients ($J_{i,j}$) representing the interaction between the i-th position variable ($x_i$) in the $N \times N$ matrices (J) and the other (N-1) position variables ($x_{1 \text{ to } i-1}$, $x_{i+1 \text{ to } N}$), and the i-th bias coefficient ($h_i$).

Subsequently, in S15, the simulated bifurcation machine executes an x update processing of updating each of the N position variables ($x_1$ to $x_N$). The simulated bifurcation machine updates the i-th position variable ($X_i$) by the i-th momentum variable ($y_i$) in the update processing of the i-th position variable ($x_i$) in the x update processing.

Note that the simulated bifurcation machine may execute the processing of S14 and the processing of S15 in an order changed.

Subsequently, in S16, the simulated bifurcation machine executes a wall processing on the position variable whose absolute value exceeds one among the N position variables ($x_1$ to $x_N$). Moreover, the simulated bifurcation machine also executes a wall processing on the momentum variable corresponding to the position variable whose absolute value exceeds one. For example, in the wall processing, the simulated bifurcation machine changes a value of the position variable whose absolute value exceeds one to a value whose absolute value is one or smaller than one in a state where the signs are the same. Moreover, for example, the simulated bifurcation machine changes a value of the momentum variable corresponding to the position variable whose absolute value exceeds one to zero in the wall processing.

The simulated bifurcation algorithm has variations in operations of the x update processing, the y update processing, and the wall processing. For example, variations of the simulated bifurcation algorithm include an adiabatic simulated bifurcation (aSB) algorithm, a ballistic simulated bifurcation (bSB) algorithm, and a discrete simulated bifurcation (dSB) algorithm.

In a case where the processing according to the adiabatic simulated bifurcation algorithm is executed, the simulated bifurcation machine executes an operation represented by Expression (4-1) in the y update processing (S14) and executes an operation represented by Expression (4-2) in the x update processing (S15). Note that, in a case where the processing according to the adiabatic simulated bifurcation algorithm is executed, the simulated bifurcation machine does not execute the wall processing (S15).

$$y_i(t_{k+1}) = y_i(t_k) + \left\{ -Kx_i^3(t_k) - [a_0 - a(t_k)]x_i(t_k) - \eta h_i + c_0 \sum_{j=1}^{N} J_{i,j} x_j(t_k) \right\} \Delta_t \quad \cdots (4\text{-}1)$$

$$x_i(t_{k+1}) = x_i(t_k) + a_0 y_i(t_{k+1})\Delta_t \quad \cdots (4\text{-}2)$$

In a case where the processing according to the ballistic simulated bifurcation algorithm is executed, the simulated bifurcation machine executes an operation represented by Expression (5-1) in the y update processing (S14), executes an operation represented by Expression (5-2) in the x update processing (S15), and executes an operation represented by Expression (5-3) in the wall processing (S16).

$$y_i(t_{k+1}) = y_i(t_k) + \left\{ -[a_0 - a(t_k)]x_i(t_k) - \eta h_i + c_0 \sum_{j=1}^{N} J_{i,j} x_j(t_k) \right\} \Delta_t \quad \cdots (5\text{-}1)$$

$$x_i(t_{k+1}) = x_i(t_k) + a_0 y_i(t_{k+1})\Delta_t \quad \cdots (5\text{-}2)$$

$$\text{if } |x_i(t_{k+1})| > 1, \text{ set } x_i(t_{k+1}) = \text{sgn}(x_i(t_{k+1})) \text{ and } y_i(t_{k+1}) = 0 \quad \cdots (5\text{-}3)$$

In a case where the processing according to the discrete simulated bifurcation algorithm is executed, the simulated bifurcation machine executes an operation represented by Expression (6-1) in the y update processing (S14), executes an operation represented by Expression (6-2) in the x update processing (S15), and executes an operation represented by Expression (6-3) in the wall processing (S16).

$$y_i(t_{k+1}) = y_i(t_k)$$

$$+ \left\{ \begin{array}{l} -[a_0 - a(t_k)]x_i(t_k) - \eta h_i \\[2em] + c_0 \sum_{j=1}^{N} J_{i,j}\,\mathrm{sgn}[x_i(t_k)] \end{array} \right\} \Delta_t \qquad \cdots (6\text{-}1)$$

$$x_i(t_{k+1}) = x_i(t_k) + a_0 y_i(t_{k+1})\Delta_t \qquad \cdots (6\text{-}2)$$

$$\text{if } |x_i(t_{k+1})| > 1, \text{ set } x_i(t_{k+1}) = \mathrm{sgn}\big(x_i(t_{k+1})\big) \text{ and } y_i(t_{k+1}) = 0 \qquad \cdots (6\text{-}3)$$

In Expressions (4-1), (4-2), (5-1), (5-2), (5-3), (6-1), (6-2), and (6-3), each of $t_k$ and $t_{k+1}$ represent a time. $t_{k+1}$ is a time obtained by adding a unit time ($\Delta t$) to $t_k$.

$x_i(t_k)$ indicates a value of the i-th position variable ($x_i$) at the time ($t_k$). $x_i(t_{k+1})$ indicates a value of the i-th position variable ($X_i$) at the time ($t_{k+1}$). $y_i(t_k)$ indicates a value of the i-th momentum variable ($y_i$) at the time ($t_k$). $y_i(t_{k+1})$ indicates a value of the i-th momentum variable ($y_i$) at the time ($t_{k+1}$).

K, $a_0$, $\eta$, and $c_0$ are predetermined constants. $a(t_k)$ is a function that varies with a time. $a(t_k)$, where, for example, $a(t_1) = 0$, is a positive real number that increases as the time increases, and is a function that is $a_0$ at the end time (T) ($a(T) = a_0$). Moreover, $\mathrm{sgn}(x_i(t_k))$ is a function that outputs the sign of the i-th position variable ($X_i$) at the time ($t_k$), and is +1 when $x_i(t_k)$ is zero or more and -1 when $x_i(t_k)$ is less than zero.

In a case where the processing of S14 to S16 are executed a predetermined number of times, that is, in a case where the operation is executed until time t reaches final time T, the simulated bifurcation machine exits the loop processing between S13 and S17 and advances the processing to S18.

In S18, the simulated bifurcation machine outputs N position variables ($x_1$ to xrr) at the final time or N decision variables ($s_1$ to $s_N$) calculated based on the N position variables ($x_1$ to $x_N$) at the final time. The simulated bifurcation machine calculates the i-th decision variable ($s_i$) among the N decision variables ($s_1$ to $s_N$) based on $\mathrm{sgn}(x_i)$.

When the processing of S18 ends, the simulated bifurcation machine ends the processing according to the simulated bifurcation algorithm.

Note that the number of repetitions of the time evolution processing (loop processing between S13 and S17) is determined in advance in accordance with the application. The calculation amount necessary for one processing (one processing of S14 to S16) in the time evolution processing does not change. Therefore, the simulated bifurcation machine can reduce the fluctuation in the solving time. Therefore, even when the simulated bifurcation machine is applied to a real-time system having a time constraint that the processing is required to be completed by a predetermined time, the solution can be reliably output by the predetermined time.

Moreover, as disclosed in, for example, JP 2019-159566 A, the simulated bifurcation machine can be configured using a dedicated parallel processing circuit including a large number of arithmetic units. As a result, the simulated bifurcation machine can extremely shorten the calculation time of one processing in the time evolution processing. In addition, unlike the case of software processing, in a simulated bifurcation machine mounted on a dedicated hardware circuit, any interrupt processing does not occur, so that the solving time is strictly fixed. For example, a simulated bifurcation machine mounted on a dedicated hardware circuit can fix the time until a solution is obtained in units of clock cycles. Therefore, in a case where the simulated bifurcation machine mounted on a dedicated hardware circuit is applied to a real-time system, it is possible to output a solution while more reliably protecting a time constraint.

FIG. 4 is a diagram illustrating a configuration of an information processing system including an Ising machine and a host device. An information processing system having a function of solving a combination optimization problem can be configured by, for example, an Ising machine and a host device. The host device executes processing other than processing executed by the Ising machine. In this case, the Ising machine is introduced for the purpose of reducing the solving time of the combination optimization problem and is considered as an accelerator or an off-loader. The host device includes a general-purpose processor, an off-loader other than an Ising machine, a memory, a storage, a sensor, an actuator, a communication interface, and the like.

The host device provides the Ising machine with at least information identifying the QUBO problem (matrix (Q)) or information identifying the Ising problem (matrix (J) and bias coefficient (h)). The Ising machine may acquire information identifying the QUBO problem (matrix (Q)) and convert it into information identifying the Ising problem (matrix (J) and bias coefficient (h)). Then, after the optimization processing, the Ising machine returns arrangement information ($s^{opt}$) representing N decision variables ($s_1$ to $s_N$) as a solution to the host device.

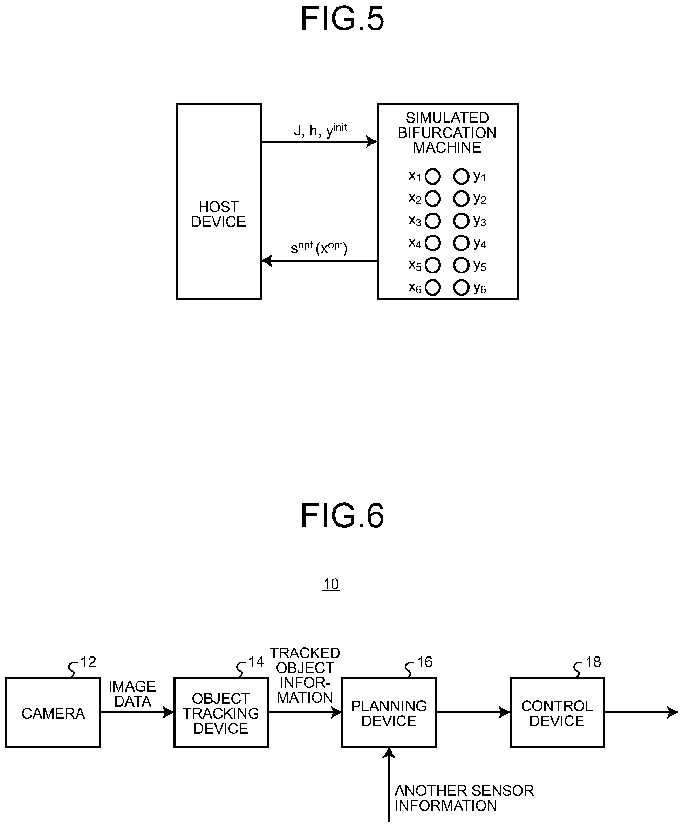

FIG. 5 is a diagram illustrating a configuration of an information processing system including a simulated bifurcation machine and a host device.

An information processing system having a function of solving a combination optimization problem may include a simulated bifurcation machine as an Ising machine. In this case, the host device provides the simulated bifurcation machine with information (matrix (J) and bias coefficient (h)) for identifying the Ising problem. Further, the host device may provide the simulated bifurcation machine with initial values of the N position variables ($x_1$ to $x_N$) and initial values of the N momentum variables ($y_1$ to $y_N$). In addition, the host device may provide the simulated bifurcation machine with various constants, functions (for example, K, $a_0$, $c_0$, a(t) and $\Delta t$), and the like used in the simulated bifurcation algorithm. After the optimization processing, the simulated bifurcation machine may return, as a solution, the arrangement information ($x^{opt}$) representing N position variables ($x_1$ to $x_N$) to the host device, instead of the arrangement information ($s^{opt}$) representing N decision variables ($s_1$ to $s_N$).

Embodiment

Next, an object tracking system 10 according to the embodiment will be described (FIG. 6).

The object tracking system 10 is an information processing system having a function of solving a constrained combination optimization problem, and is an example of a real-time system. Specifically, the object tracking system 10 is an example of an information processing system that detects a valid constraint violation solution among solutions of a constrained combination optimization problem and executes processing based on the valid constraint violation solution.

The real-time system is a system having a time constraint that processing is required to be completed by a predetermined time. Instead of processing only past accumulated information, many real-time systems recognize a current situation that changes from moment to moment, determine a response action according to the recognized situation, and immediately execute the determined response action.

A problem for determining an optimal response action according to a recognized situation may be formulated as a combination optimization problem. In a real-time system, a response action determined based on an exact solution or a good solution of a combination optimization problem can be regarded as a reasonable action. However, it is not easy to solve the combination optimization problem in a short time. For this reason, the conventional real-time system often determines a response action based on simple condition determination.

FIG. 6 is a diagram illustrating a configuration of the object tracking system 10 according to the embodiment.

The object tracking system 10 includes a camera 12, an object tracking device 14, a planning device 16, and a control device 18.

The camera 12 captures an image of a surrounding scene and generates image data that may include one or more captured objects. The camera 12 generates image data at regular time intervals (for example, for each frame that is an imaging interval). The camera 12 is, for example, an optical imaging camera. The camera 12 may be, for example, a camera system including a monocular camera (mono camera) and a stereo camera used in an advanced drive assistance system (ADAS) or the like, or another sensor. The camera 12 supplies image data generated at regular time intervals to the object tracking device 14.

The object tracking device 14 acquires image data generated at regular time intervals from the camera 12. Then, the object tracking device 14 tracks an object included in the image data. Specifically, the object tracking device 14 stores one or more pieces of tracked object information representing one or more tracked objects to be tracked, and updates the one or more pieces of tracked object information representing the one or more tracked objects to be tracked based on the acquired image data at regular time intervals. Note that the object tracking device 14 does not need to store the tracked object information since there is no tracked object to be tracked in the initial state or in a state where there is no object around. Each of the one or more pieces of tracked object information represents the position, size, and the like of the tracked object to be tracked. Each of the one or more pieces of tracked object information may include information representing a type or the like of the tracked object, information representing a temporal change amount of a position and a size, and an age or the like indicating an elapsed time after addition or correction. The object tracking device 14 supplies the one or more pieces of tracked object information to the planning device 16 at regular time intervals.

The planning device 16 acquires the one or more pieces of tracked object information from the object tracking device 14 at regular time intervals. Moreover, the planning device 16 may further acquire sensor information from another sensor such as light detection and ranging (LiDAR) other than the camera 12. The planning device 16 generates action plan information representing a response action of an object to be controlled based on the acquired one or more pieces of tracked object information and sensor information. The planning device 16 supplies the generated action plan information to the control device 18.

The control device 18 acquires the action plan information from the planning device 16. The control device 18 controls the object to be controlled to operate the object to be controlled according to the response action information in accordance with the received action plan information.

Such an object tracking system 10 is applied to, for example, an automatic control mechanism that sets a moving object as an object to be controlled. An automatic control mechanism that sets a moving object as an object to be controlled generally periodically repeats a series of operations including sensing, situation recognition, action planning, and control. These series of operations are typically performed from ten to tens of times per second. That is, a cycle of these series of operations is typically about 100 milliseconds or 100 milliseconds or less. The throughput of the object tracking system 10 is limited by the slowest module of the modules that make up the system. Therefore, when applied to an automatic control mechanism that sets a moving object as an object to be controlled, each of modules constituting the object tracking system 10 is required to realize a required throughput while performing the processing on data (for example, stream data) sequentially input/output without stagnation. Note that the object tracking system 10 is not limited to an automatic control mechanism that sets a moving object as an object to be controlled, and may be used for a mechanism that controls another object to be controlled.

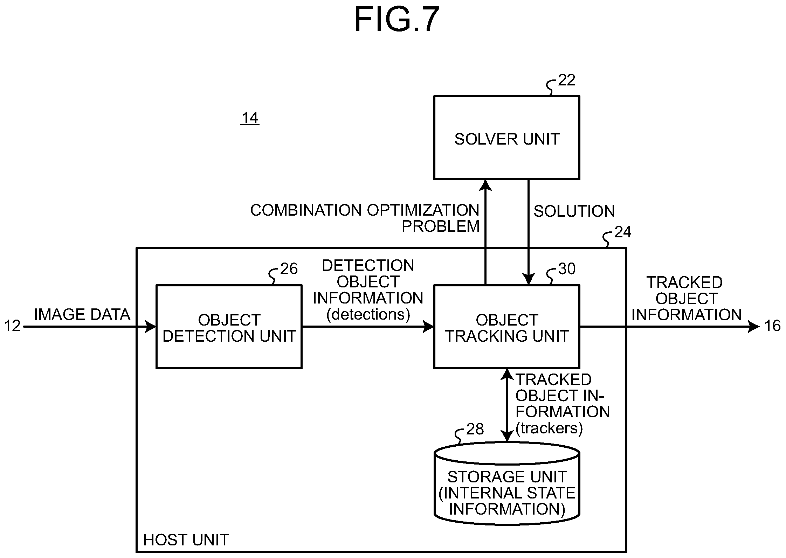

Here, the object tracking device 14 (FIG. 7) executes a matching processing which is a piece of the processing of solving the combination optimization problem under the constraint condition. The object tracking device 14 reduces the matching processing to the Ising problem and solves the Ising problem using the combination optimization solver. The combination optimization solver used by the object tracking device 14 can output the constraint satisfaction solution and the constraint violation solution. Moreover, the object tracking device 14 executes an arbitration processing of evaluating and determining the solution output by the combination optimization solver. In the arbitration processing, in a case where a valid constraint violation solution relatively close to the control satisfaction solution among the constraint violation solutions is obtained, the object tracking device 14 generates the constraint violation control signal based on the valid constraint violation solution. Then, the object tracking device 14 executes predetermined constraint violation processing on the tracked object information corresponding to the constraint violation portion among the one or more pieces of tracked object information in response to the constraint violation control signal.

A phenomenon in which a tracked object is temporarily hidden or a situation in which the tracked object is temporarily hidden by another tracked object or an occluding object other than the tracked object when viewed from the camera 12 is referred to as occlusion. The ability to continue tracking of the tracked object without interruption even by occlusion is referred to as an occlusion handling ability. The object tracking device 14 can improve the occlusion handling ability by executing the constraint violation processing using the valid constraint violation solution.

FIG. 7 is a diagram illustrating a configuration of the object tracking device 14.

The object tracking device 14 includes a solver unit 22 and a host unit 24.

The solver unit 22 is a combination optimization solver, acquires a combination optimization problem to output a solution to the acquired combination optimization problem. The solver unit 22 calculates a solution to the acquired combination optimization problem by a heuristic solution. Moreover, the solver unit 22 outputs a solution within a certain time after acquiring the combination optimization problem. In the present embodiment, the solver unit 22 is implemented using a simulated bifurcation machine that is a hardware calculation apparatus using a simulated bifurcation algorithm.

The host unit 24 is implemented by an information processing device including an arithmetic processing device (general-purpose processor), a random access memory (RAM), a read only memory (ROM), a storage device, a communication interface, and the like executing a program. Moreover, the host unit 24 may include an accelerator for object detection. The host unit 24 executes processing other than the solving processing of the combination optimization problem among the processing executed by the object tracking device 14. Moreover, the host unit 24 may be implemented by an information processing device common to the planning device 16 and the control device 18.

The host unit 24 includes an object detection unit 26, a storage unit 28, and an object tracking unit 30.

The object detection unit 26 acquires image data from the camera 12 at regular time intervals, for example, for each frame. The object detection unit 26 generates one or more pieces of detection object information representing one or more objects included in the image data at regular time intervals. Note that the object detection unit 26 does not output the detection object information at the time when the detection object is not included in the image data in the processing at regular time intervals. Each of the one or more pieces of detection object information includes a position and a size of one object to be detected included in the image data. In the present embodiment, each of the one or more pieces of detection object information is boundary box information. The boundary box information includes horizontal and vertical pixel positions of the center, an area, and an aspect ratio of the box in the angle of view of the image data. Moreover, the boundary box information may include horizontal and vertical pixel positions at the upper left and lower right of the box in the angle of view of the image data, instead of the center of the box. Each of the one or more pieces of detection object information includes identification information for distinguishing a plurality of objects included in one frame. Further, each of the one or more pieces of detection object information may include type information (for example, a distinction between a vehicle and a person, a distinction between colors, or the like) and distance information (distance from the camera 12 to the detection object) about the detection object.

For example, the object detection unit 26 generates one or more pieces of detection object information from the image data by an existing method. In the present embodiment, the object detection unit 26 generates one or more pieces of detection object information according to the YOLO technique described in, Joseph Redmon, Santosh Divvala, Ross Girshick and Ali Farhadi, "You Only Look Once: Unified, Real-Time Object Detection", Proceedings of the IEEE Conference on Computer Vision and Pattern Recognition (CVPR), 2016, pp. 779-788. In addition, the object detection unit 26 may generate one or more pieces of detection object information according to the SSD technology disclosed in, Wei Liu, et al., "SSD: Single Shot MultiBox Detector", Springer International Publishing AG 2016, ECCV 2016, Part I, LNCS vol 9905, pp. 21-37, 2016. A vehicle, a person, a flying object, or the like may be set as the object to be detected.

The object detection unit 26 supplies the generated one or more pieces of detection object information to the object tracking unit 30 at regular time intervals. For example, in a case where $N_d$ ($N_d$ is an integer of one or more) detection objects are detected, the object detection unit 26 generates information (detections) shown in Expression (7).

$$\text{detections} = \begin{bmatrix} d_1, d_2, d_3, \cdots, d_i, \cdots, d_{Nd} \end{bmatrix} \quad \cdots (7)$$

$d_i$ represents i-th detection object information.

For example, i-th detection object information ($d_i$, detection) is represented by Expression (8).

$$d_i = \begin{bmatrix} u_i, v_i, s_i, r_i \end{bmatrix} \quad \cdots (8)$$

$u_i$ represents a horizontal pixel position of the center of the boundary box in the angle of view. $v_i$ represents a vertical pixel position of the center of the boundary box in the angle of view. $s_i$ represents an area of the boundary box in the angle of view. $r_i$ represents an aspect ratio of the boundary box.

The storage unit 28 stores internal state information. The internal state information includes one or more pieces of tracked object information in a case where one or more tracked objects to be tracked are present. For example, in a case where the internal state information includes $N_t$ ($N_t$ is an integer of one or more) pieces of tracked object information, the internal state information (internal_state) is represented by Expression (9).

$$\text{Internal\_state} = \begin{bmatrix} t_1, t_2, t_3, \cdots, t_i, \cdots, t_{Nt} \end{bmatrix}^T \quad \cdots (9)$$

$t_i$ represents i-th tracked object information. Note that T represents transposition of the matrix.

The i-th tracked object information ($t_i$, tracker) is represented by Expression (10).

$$t_i = \begin{bmatrix} u_i, v_i, s_i, r_i, \dot{u}_i, \dot{v}_i, \dot{s}_i, age_i \end{bmatrix}^T \quad \cdots (10)$$

Symbols with dots above $u_i$, $v_i$, $s_i$, and $r_i$ represent amounts of change per unit time of $u_i$, $v_i$, $s_i$, and $r_i$, respectively. $age_i$ represents an age. The age increases in a case where correspondence with the current detection object cannot be taken, and represents an elapsed time from when the tracked object information is added or corrected. The tracked object information is deleted from the internal state information in a case where the age exceeds a preset threshold value (max_age).

Note that unless deleted from the internal state information due to the age exceeding the threshold value, the storage unit 28 continues to store one or more pieces of tracked object information included in the internal state information beyond a certain period of time, for example, beyond the time of the frame interval. Such a function in the storage unit 28 is referred to as a state memory.

The object tracking unit 30 acquires one or more pieces of detection object information generated by the object detection unit 26 at regular time intervals. The object tracking unit 30 generates a combination optimization problem that associates detection object information determined to represent the same object among the one or more pieces of detection object information with each of the one or more pieces of tracked object information at regular time intervals. That is, the object tracking unit 30 generates a combination optimization problem that associates detection object information likely to be information representing the same object among the one or more pieces of detection object information with each of the one or more pieces of tracked object information at regular time intervals. Such a combination optimization problem is implemented as one of combination optimization problems that optimize a plurality of pieces of data under a predetermined constraint condition.

Subsequently, the object tracking unit 30 gives the generated combination optimization problem to the solver unit 22, and acquires a solution to the combination optimization problem from the solver unit 22. At the time when the detection object is not included in the image data and the detection object information is not acquired, the object tracking unit 30 does not generate the combination optimization problem or acquire the solution, and generates information representing that the detection object information is not associated with any of one or more pieces of tracked object information. In addition, at the time when the tracked object to be tracked does not exist and the tracked object information is not stored, the object tracking unit 30 does not generate the combination optimization problem or acquire the solution, and generates information representing that the tracked object information is not associated with any of one or more pieces of detection object information. Subsequently, the object tracking unit 30 updates one or more pieces of tracked object information included in the internal state information stored in the storage unit 28 according to the framework of the Kalman filter based on the acquired solution and the generated information at regular time intervals. Then, the object tracking unit 30 supplies the updated one or more pieces of tracked object information to the planning device 16 in the subsequent stage.

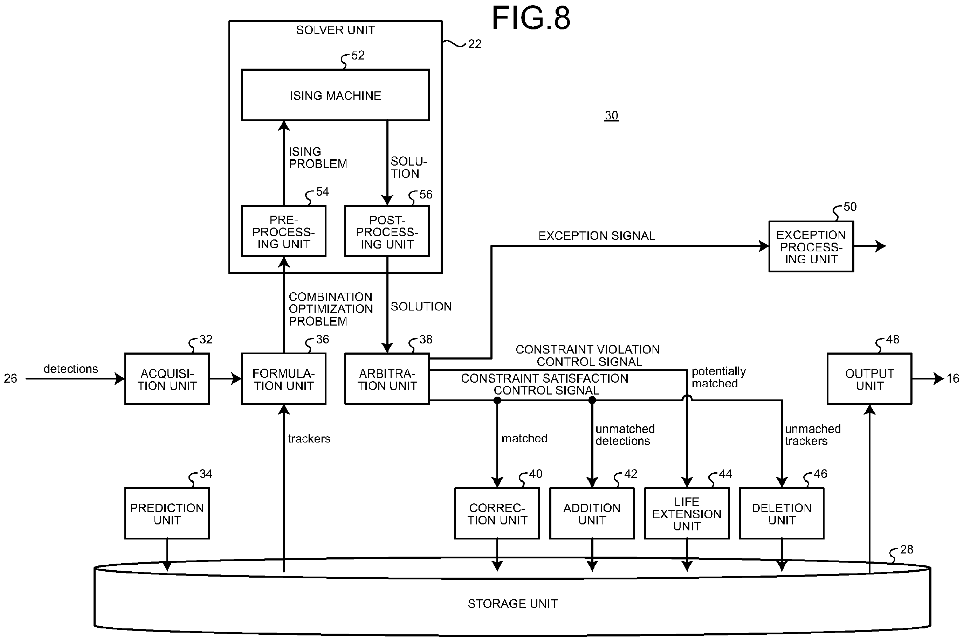

FIG. 8 is a diagram illustrating a configuration of the object tracking unit 30 together with the solver unit 22 and the storage unit 28.

The object tracking unit 30 includes an acquisition unit 32, a prediction unit 34, a formulation unit 36, an arbitration unit 38, a correction unit 40, an addition unit 42, a life extension unit 44, a deletion unit 46, an output unit 48, and an exception processing unit 50.

The acquisition unit 32 acquires one or more pieces of detection object information (detections) representing one or more detection objects included in the image data from the object detection unit 26 at regular time intervals. For example, in the processing on the image data at any first time, the acquisition unit 32 acquires one or more pieces of detection object information at the first time indicating one or more detection objects included in the image data at the first time. The acquisition unit 32 does not acquire the detection object information at the time when the image data does not include the detection object.

At regular time intervals, the prediction unit 34 predicts one or more pieces of tracked object information representing one or more tracked objects at the current time point based on one or more pieces of tracked object information (trackers) indicating one or more tracked objects in the past included in the internal state information of the storage unit 28. For example, the prediction unit 34 predicts one or more pieces of tracked object information at the first time based on one or more pieces of tracked object information representing one or more tracked objects before the first time stored in the storage unit 28.

For example, the prediction unit 34 predicts the horizontal pixel position, the vertical pixel position, and the area included in the tracked object information, and the amount of change per unit time thereof by a constant velocity model that is a predefined time evolution model. In this case, the prediction unit 34 may predict that the aspect ratio included in each of the one or more pieces of tracked object information does not change. Moreover, the prediction unit 34 increases the age included in each of the one or more pieces of tracked object information by a predetermined value (for example, one).

Then, the prediction unit 34 rewrites one or more pieces of tracked object information in the past included in the internal state information of the storage unit 28 to one or more pieces of tracked object information at the current time. For example, the prediction unit 34 rewrites one or more pieces of tracked object information before the first time stored in the storage unit 28 to one or more pieces of tracked object information at the first time generated by prediction. Note that the prediction unit 34 does not perform prediction at a time at which the tracked object information is not included in the internal state information.

The formulation unit 36 acquires one or more pieces of detection object information (detections) and one or more pieces of tracked object information (trackers) at regular time intervals. For example, the formulation unit 36 generates a combination optimization problem that associates detection object information determined to represent the same object among the one or more pieces of detection object information with each of the one or more pieces of tracked object information. For example, the formulation unit 36 generates a combination optimization problem that associates detection object information determined to represent the same object among the one or more pieces of detection object information at the first time with each of the one or more pieces of tracked object information at the first time.

More specifically, the formulation unit 36 generates a bipartite graph maximum matching problem in which one or more pieces of detection object information and one or more pieces of tracked object information are associated on a one-to-one basis. The bipartite graph maximum matching problem is a constrained combination optimization problem. The bipartite graph maximum matching problem can be expressed as a combination optimization problem to minimize a total cost function obtained by adding a cost function and a penalty function. The penalty function is a function that includes at least some of the decision variables and has a minimum value when the solution satisfies the constraint condition. The total cost function of the bipartite graph maximum matching problem is expressed by a quadratic function. More specific descriptions of the cost function, the penalty function, the constraint condition, and the total cost function will be described later in detail.

Then, the formulation unit 36 supplies the generated combination optimization problem to the solver unit 22 at regular time intervals. At the time when the detection object is not included in the image data and the detection object information is not acquired, the formulation unit 36 does not generate the combination optimization problem, generates information representing that the detection object information is not associated with any of one or more pieces of tracked object information, and provides the information to the arbitration unit 38. In addition, at the time at which the tracked object to be tracked does not exist and the tracked object information is not included in the internal state information, the formulation unit 36 does not generate a combination optimization problem, generates information representing that the tracked object information is not associated with any of one or more pieces of detection object information, and provides the information to the arbitration unit 38.

The solver unit 22 acquires a combination optimization problem from the formulation unit 36 at regular time intervals. The solver unit 22 solves the acquired combination optimization problem while allowing the constraint condition not to be satisfied. For example, the solver unit 22 acquires the combination optimization problem at the first time, and solves the combination optimization problem at the first time while allowing the constraint condition to be not satisfied. Since the solution is obtained by allowing the constraint condition not to be satisfied, the solver unit 22 may output a constraint satisfaction solution that satisfies the constraint condition or may output a constraint violation solution that does not satisfy the constraint condition.

Then, the solver unit 22 outputs the solution to the combination optimization problem to the arbitration unit 38 within a predetermined time limit. For example, the solver unit 22 outputs a solution to the arbitration unit 38 within a preset time shorter than a certain time (for example, a time between two consecutive frames) after acquiring the combination optimization problem at the first time.

In the present embodiment, the solver unit 22 includes an Ising machine 52, a pre-processing unit 54, and a post-processing unit 56.

The Ising machine 52 acquires the Ising problem to output a solution to the Ising problem. In the present embodiment, the Ising machine 52 is a simulated bifurcation machine mounted on a hardware circuit. The simulated bifurcation machine solves the Ising problem by a simulated bifurcation algorithm which is a heuristic solution. Therefore, the Ising machine 52 may output not only an exact solution but also a good solution, and may also output a solution that does not satisfy the constraint condition.

In addition, the simulated bifurcation machine mounted on the hardware circuit can fix the time from acquisition of the Ising problem to acquisition of the solution in units of clock cycles. Therefore, the solver unit 22 including such an Ising machine 52 can output the solution to the combination optimization problem within a predetermined time limit at regular time intervals.

The pre-processing unit 54 acquires a combination optimization problem from the formulation unit 36. The pre-processing unit 54 converts the acquired combination optimization problem into an Ising problem and supplies the Ising problem to the Ising machine 52. As a result, the solver unit 22 can reduce the combination optimization problem generated by the formulation unit 36 to the Ising problem and solve the Ising problem. Note that the pre-processing unit 54 may be included in the formulation unit 36 instead of being included in the solver unit 22.

The post-processing unit 56 acquires a solution to the Ising problem from the Ising machine 52. The post-processing unit 56 converts the solution to the Ising problem into the solution to the combination optimization problem generated by the formulation unit 36, and supplies the solution to the arbitration unit 38. Note that the post-processing unit 56 may be included in the arbitration unit 38 instead of being included in the solver unit 22.

The arbitration unit 38 acquires a solution from the solver unit 22 at regular time intervals. The arbitration unit 38 determines whether the acquired solution satisfies a constraint condition in the combination optimization problem generated by the formulation unit 36. In a case where the acquired solution does not satisfy the constraint condition, the arbitration unit 38 further determines whether the acquired solution is a valid constraint violation solution close to the constraint satisfaction solution or whether the acquired solution is a valid constraint violation solution far from the constraint satisfaction solution based on a predetermined evaluation criterion. An example of the evaluation criterion will be described later in detail.

In addition, in a case where the acquired solution does not satisfy the constraint condition and the acquired solution is a valid constraint violation solution, the arbitration unit 38 identifies a constraint satisfaction portion that satisfies the constraint condition in the acquired solution and a constraint violation portion that does not satisfy the constraint condition in the solution.

For example, the arbitration unit 38 changes the values of some decision variables as a factor by which the constraint condition is not satisfied among the valid constraint violation solutions, and identifies the constraint satisfaction portion. In addition, for example, the arbitration unit 38 may exclude the values of some decision variables as a factor by which the constraint condition is not satisfied in the valid constraint violation solution, and identifies the constraint satisfaction portion. In the constraint satisfaction portion, the decision variables included is values that satisfy the constraint condition. In addition, for example, the arbitration unit 38 extracts the values of some decision variables as a factor by which the constraint condition is not satisfied in the valid constraint violation solution, and identifies the constraint violation portion.

In a case where the solution satisfies the constraint condition, the arbitration unit 38 generates a constraint satisfaction control signal based on the solution satisfying the constraint condition. The constraint satisfaction control signal includes a matched signal (matched), an unmatched detection object signal (unmatched_detections), and an unmatched tracked object signal (unmatched_trackers). The matched signal is a signal indicating detection object information associated with each piece of tracked object information associated with the detection object information among one or more pieces of tracked object information. The unmatched detection object signal (unmatched_detections) is a signal indicating detection object information with which the tracked object information is not associated among one or more pieces of detection object information. The unmatched tracked object signal (unmatched_trackers) is a signal indicating tracked object information with which the detection object information is not associated among one or more pieces of tracked object information.

In a case where the acquired solution does not satisfy the constraint condition and the acquired solution is a valid constraint violation solution, the arbitration unit 38 generates a constraint satisfaction control signal based on the identified constraint satisfaction portion. As in the constraint satisfaction control signal indicating the solution satisfying the constraint condition, the constraint satisfaction control signal based on the constraint satisfaction portion includes a matched signal based on the constraint satisfaction portion, an unmatched detection object signal based on the constraint satisfaction portion, and an unmatched tracked object signal based on the constraint satisfaction portion.

Further, in a case where the acquired solution does not satisfy the constraint condition and the acquired solution is a valid constraint violation solution, the arbitration unit 38 generates the constraint violation control signal based on the constraint violation portion. The constraint violation control signal includes a potentially matched signal (potentially_matched). The potentially matched signal is a signal indicating the tracked object information corresponding to the constraint violation portion of the one or more tracked object information.

In a case where the solution satisfies the constraint condition, the arbitration unit 38 supplies the constraint satisfaction control signal to the correction unit 40, the addition unit 42, and the deletion unit 46. More specifically, the arbitration unit 38 supplies the matched signal to the correction unit 40, supplies the unmatched detection object signal to the addition unit 42, and supplies the unmatched tracked object signal to the deletion unit 46.

In a case where the solution does not satisfy the constraint condition and the acquired solution is a valid constraint violation solution, the arbitration unit 38 supplies a constraint satisfaction control signal to the correction unit 40, the addition unit 42, and the deletion unit 46, and supplies a constraint violation control signal to the life extension unit 44. More specifically, the arbitration unit 38 supplies the matched signal to the correction unit 40, supplies the unmatched detection object signal to the addition unit 42, supplies the unmatched tracked object signal to the deletion unit 46, and supplies the potentially matched signal to the life extension unit 44.

In a case where the solution does not satisfy the constraint condition and the acquired solution is not a valid constraint violation solution, the arbitration unit 38 generates an exception signal for executing an exception processing and supplies the exception signal to the exception processing unit 50.

Note that the arbitration unit 38 does not acquire the combination optimization problem at the time when the detection object is not included in the image data and the detection object information is not acquired, or at the time when the tracked object to be tracked does not exist and the tracked object information is not included in the internal state information. At the time when the detection object is not included in the image data and the detection object information is not acquired, the arbitration unit 38 generates unmatched tracked object information for all the tracked object information included in the internal state information and supplies the unmatched tracked object information to the deletion unit 46. In addition, at the time when the tracked object to be tracked does not exist and the tracked object information is not included in the internal state information, the arbitration unit 38 generates unmatched detection object information for all the acquired detection object information and supplies the unmatched detection object information to the addition unit 42.

The correction unit 40 acquires a matched signal included in the constraint satisfaction control signal at regular time intervals. The correction unit 40 corrects, based on the associated detection object information, the tracked object information with which any of the one or more pieces of detection object information is associated among the one or more pieces of tracked object information included in the internal state information stored in the storage unit 28 based on the matched signal at regular time intervals. For example, the correction unit 40 corrects, by the associated detection object information, the tracked object information associated with any of the one or more pieces of detection object information among the one or more pieces of tracked object information at the first time based on the matched signal. For example, the correction unit 40 corrects the target tracked object information according to the Kalman filter theory based on the information included in the associated detection object information. As a result, the correction unit 40 can reflect the state of the detection object included in the image data on one or more pieces of tracked object information included in the internal state information. Moreover, the correction unit 40 changes the age included in the target tracked object information to an initial value (for example, zero).

The addition unit 42 acquires an unmatched detection object signal included in the constraint satisfaction control signal at regular time intervals. The addition unit 42 adds, as new tracked object information, the detection object information not associated with tracked object information among the one or more pieces of detection object information to the one or more pieces of tracked object information included in the internal state information stored in the storage unit 28 based on the unmatched detection object signal at regular time intervals. For example, the addition unit 42 adds, as new tracked object information, the detection object information not associated with tracked object information among the one or more pieces of detection object information at the first time to the one or more pieces of tracked object information at the first time based on the unmatched detection object signal. As a result, the addition unit 42 can reflect the detection object newly framed in the image data on one or more pieces of tracked object information included in the internal state information. Moreover, the correction unit 40 sets the age included in the newly added tracked object information to an initial value (for example, zero).

The life extension unit 44 obtains a potentially matched signal included in the constraint violation control signal at regular time intervals. The life extension unit 44 decreases, by a predetermined value, the age indicating the elapsed time from the addition or the correction in the tracked object information corresponding to the constraint violation portion among the one or more pieces of tracked object information included in the internal state information stored in the storage unit 28 based on the potentially matched signal at regular time intervals. For example, the life extension unit 44 decreases, by a predetermined value, the age in the tracked object information corresponding to the constraint violation portion among the one or more pieces of tracked object information at the first time based on the potentially matched signal. As a result, the life extension unit 44 can prevent the tracked object information from being deleted even when the target tracked object is temporarily not included in the image data due to occlusion. Therefore, the life extension unit 44 can continuously track the tracked object that appears again in the image data after the occlusion is eliminated.

The deletion unit 46 acquires the unmatched tracked object signal included in the constraint satisfaction control signal at regular time intervals. The deletion unit 46 deletes tracked object information in which the age exceeds a predetermined threshold value among the one or more pieces of tracked object information included in the internal state information stored in the storage unit 28 based on the unmatched tracked object signal at regular time intervals. For example, the deletion unit 46 deletes tracked object information in which the age exceeds a predetermined threshold value among the one or more pieces of tracked object information at the first time based on the unmatched tracked object signal. As a result, the deletion unit 46 can delete the tracked object framed out from the image data from the internal state information and update the internal state information to the latest state. In addition, the deletion unit 46 can delete information about an object that does not need to be tracked from the internal state information, and suppress a continuous increase in one or more pieces of tracked object information included in the internal state information.

The threshold value is set to a value that is not deleted at least at the first time for the tracked object information in which the life extension unit 44 decreases the age by a predetermined value at the first time. That is, the deletion unit 46 does not delete, at the first time, the tracked object information in which the life extension unit 44 decreases the age by the predetermined value at the first time. As a result, the life extension unit 44 can prevent the tracked object information from being deleted in a case where the target tracked object is temporarily not included in the image data due to occlusion, for example.

The output unit 48 outputs one or more pieces of tracked object information included in the internal state information stored in the storage unit 28 to the planning device 16. For example, the output unit 48 outputs one or more pieces of tracked object information at the first time to the planning device 16. Note that the output unit 48 may output one or more pieces of tracked object information in response to a request from the planning device 16, or may output one or more pieces of tracked object information asynchronously with the time interval of the frame without outputting one or more pieces of tracked object information at regular time intervals.

Moreover, the output unit 48 may output some information included in each of the one or more pieces of tracked object information. For example, the output unit 48 may output the horizontal pixel position, the vertical pixel position, the area, and the identification information for each of the one or more pieces of tracked object information. Moreover, the output unit 48 may output the type information of the tracked object.

The exception processing unit 50 acquires the exception signal from the arbitration unit 38. In a case where the exception signal is acquired, the exception processing unit 50 instructs, for example, another device to execute the exception processing executed in a case where, for example, the object tracking unit 30 cannot appropriately track the object. For example, the exception processing unit 50 outputs warning information, outputs a signal indicating that the tracking accuracy has deteriorated to the planning device 16 or the like, and initializes or resets processing in the object tracking unit 30.

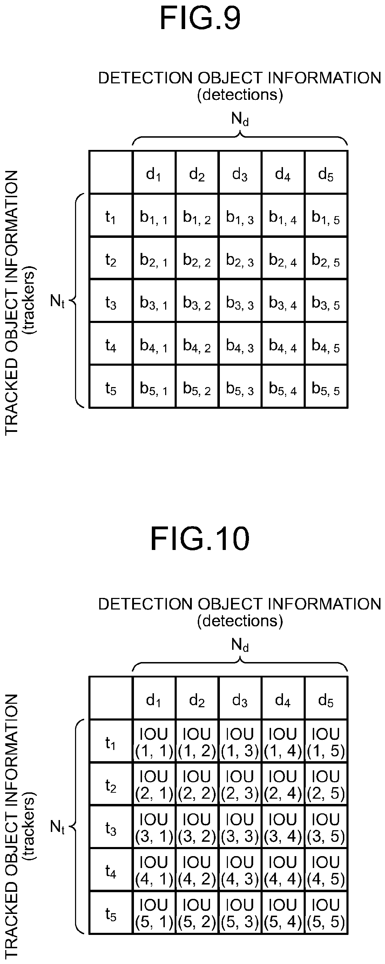

FIG. 9 is a diagram illustrating an example of a plurality of decision variables included in the combination optimization problem generated by the formulation unit 36. FIG. 10 is a diagram illustrating an example of a plurality of coefficients included in the combination optimization problem generated by the formulation unit 36.

The formulation unit 36 generates a combination optimization problem that associates detection object information determined to represent the same object among the one or more pieces of detection object information at the first time with each of the one or more pieces of tracked object information at any first time under a predetermined constraint condition. More specifically, the formulation unit 36 generates a bipartite graph maximum matching problem as a combination optimization problem for minimizing a cost function under a predetermined constraint condition.

Hereinafter, the bipartite graph maximum matching problem generated by the formulation unit 36 will be further described.

Unique identification information is assigned to each of the one or more pieces of detection unit information and each of the one or more pieces of tracked object information. Identification information that does not overlap identification information allocated in the past is allocated to the detection object information newly added to one or more pieces of detection object information. Identification information that does not overlap with identification information assigned in the past is allocated to the tracked object information newly added to the one or more pieces of tracked object information.

In the examples of FIGS. 9 and 10, identification information of $d_1$, $d_2$, $d_3$, $d_4$, and ds is assigned to five pieces of detection object information. In addition, in the examples of FIGS. 9 and 10, identification information of $t_1$, $t_2$, $t_3$, $t_4$, and $t_5$ is assigned to five pieces of tracked object information.

For example, it is assumed that the number of pieces of one or more pieces of detection object information is $N_d$. Further, for example, it is assumed that the number of pieces of one or more pieces of tracked object information is $N_t$. In this case, the formulation unit 36 defines $N_t \times N_d$ decision variables.

The decision variable is represented as $b_{t,d}$. $b_{t,d}$ is a bit variable and represents zero or one.

More specifically, $b_{t,d}$ represents one in a case where d-th (d is an integer of one or more and $N_d$ or less) detection object information among one or more pieces of detection object information as being determined to represent the same object is associated with t-th (t is an integer of one or more and $N_t$ or less) tracked object information among one or more pieces of tracked object information, and $b_{t,d}$ represents zero in a case where d-th detection object information is not associated with t-th tracked object.

The cost function ($H_{cost}$) not including the constraint condition in the bipartite graph maximum matching problem is represented by Expression (11).

$$H_{cost} = -\sum_{t=1}^{N_t} \sum_{d=1}^{N_d} IOU(t, d) b_{t,d} \qquad \cdots (11)$$

The IOU(t, d) is a real number of zero or more and represents a coefficient. The IOU(t, d) is a coefficient representing a large value as it is determined that the t-th tracked object information and the d-th detection object information represent the same object. For example, the IOU(t, d) has a larger value as the degree of coincidence between the position and size of the tracked object indicated by the t-th tracked object information and the position and size of the detection object indicated by the d-th detection object information is larger.

In the present embodiment, the IOU(t, d) is a value obtained by dividing an area of an overlapping portion between the boundary box represented by the t-th tracked object information and the boundary box represented by the d-th detection object information by an area of a rectangle including the boundary box represented by the t-th tracked object information and the boundary box represented by the d-th detection object information.

The formulation unit 36 generates an IOU(t, d) for each of all pairs of one or more pieces of detection object information and one or more pieces of tracked object information. In a case where the number of pieces of the one or more pieces of detection object information is $N_d$ and the number of pieces of the one or more pieces of tracked object information is $N_t$, the formulation unit 36 calculates $N_t \times N_d$ IOUs (t, d).

The cost function as described above is minimized in a case where the sum total of the IOU(t, d) of the pair of the tracked object information and the detection object information determined to be associated by the decision variable, that is, the pair of the tracked object information and the detection object information in which the decision variable is one is maximum.

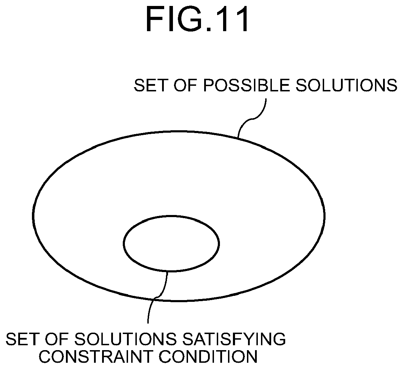

FIG. 11 is a diagram illustrating a relationship between a range of a set of solutions that can be taken by the decision variable and a range of a set of solutions that satisfy the constraint condition.

There are $(N_t \times N_d)$-th power of 2 solutions that can be taken by the decision variable. On the other hand, the solution satisfying the constraint condition in the bipartite graph maximum matching problem is some of the $(N_t \times N_d)$-th power of 2 solutions that can be taken by the decision variable. In the present embodiment, a solution that satisfies the constraint condition among a set of solutions that can be taken by the decision variable is referred to as a constraint satisfaction solution, and a solution that does not satisfy the constraint condition is referred to as a constraint violation solution.

The constraint condition in the bipartite graph maximum matching problem is represented by the constraint expressions of equality expressions shown in Expressions (12-1), (12-2), (13-1), and (13-2).

$$\begin{cases} \sum_{d=1}^{N_d} b_{t,d} = 1, \text{ (For all } t \text{ when } N_d \geq N_t) & \cdots (12\text{-}1) \\ \sum_{d \neq \acute{d}} b_{t,d} b_{t,\acute{d}} = 0, \text{ (For all } t \text{ when } N_d < N_t) & \cdots (12\text{-}2) \end{cases}$$

$$\begin{cases} \sum_{t=1}^{N_t} b_{t,d} = 1, \text{ (For all } d \text{ when } N_d \leq N_t) & \cdots (13\text{-}1) \\ \sum_{t \neq \acute{t}} b_{t,d} b_{\acute{t},d} = 0, \text{ (For all } d \text{ when } N_d > N_t) & \cdots (13\text{-}2) \end{cases}$$

When $N_d \geq N_t$, Expression (12-1) represents a constraint that, only one decision variable having a value of one among the corresponding $N_d$ decision variables exists for each of the $N_t$ pieces of tracked object information. That is, when $N_d \geq N_t$, Expression (12-1) represents that one of the $N_d$ pieces of detection object information as information representing the same object is associated with each of the $N_t$ pieces of tracked object information. Note that Expression (12-1) includes constraint expressions of $N_t$ equality expressions.

When $N_d < N_t$, Expression (12-2) represents a constraint that at least one of any two decision variables ($b_{t,d}$) and ($b_{t,d'}$) of the corresponding $N_d$ decision variables is zero for each of the $N_t$ pieces of tracked object information. That is, when $N_d < N_t$, Expression (12-2) represents that two or more pieces of detection object information among the $N_d$ pieces of detection object information as information representing the same object are not associated with each of the $N_t$ pieces of tracked object information. Note that Expression (12-2) includes constraint expressions of $N_t$ equality expressions.

When $N_d \leq N_t$, Expression (13-1) represents a constraint that only one decision variable having a value of one among the corresponding $N_t$ decision variables exists for each of the $N_d$ pieces of detection object information. That is, when $N_d \leq N_t$, Expression (13-1) represents that one of the $N_t$ pieces of tracked object information as information representing the same object is associated with each of the $N_d$ pieces of tracked object information. Note that Expression (13-1) includes constraint expressions of $N_d$ equality expressions.

When $N_d > N_t$, Expression (13-2) represents a constraint that at least one of any two decision variables ($b_{t,d}$) and ($b_{t',d}$) among the corresponding $N_t$ decision variables is zero for each of the $N_d$ pieces of detection object information. That is, when $N_d > N_t$, Expression (13-2) represents that two or more pieces of the $N_t$ pieces of tracked object information as information representing the same object are not associated with each of the $N_d$ pieces of detection object information. Note that Expression (13-2) includes constraint expressions of $N_d$ equality expressions.

Expressions (12-1), (12-2), (13-1), and (13-2) mean the following when $N_t \times N_d$ decision variables are expressed by a matrix of $N_t$ rows and $N_d$ columns as illustrated in FIG. 9.

When $N_d = N_t$, the sum of the values of the decision variable for each row is one. When $N_d = N_t$, the sum of the decision variables for each column is one.

When $N_t < N_d$, the sum of the values of the decision variable for each row is one. When $N_t < N_d$, the sum of the decision variables for each column is zero or one. When $N_t < N_d$, the number of columns in which the sum is zero is ($N_d$-$N_t$).

When $N_t > N_d$, the sum of the values of the decision variable for each column is one. When $N_t > N_d$, the sum of the decision variables for each row is zero or one. When $N_t > N_d$, the number of rows in which the sum is zero is ($N_t$-$N_d$).

As described above, the constraint condition is represented by one or more constraint expressions. Each of the one or more constraint expressions is represented by an equality expression or an inequality expression including one or more decision variables of the decision variables. Note that, in the present embodiment, each of one or more constraint expressions is represented by an equality expression including a first-order or second-order term of the decision variable.

From the above, constraint expressions represented by Expressions (12-1), (12-2), (13-1), and (13-2) represent (first condition), (second condition), and (third condition) constraint conditions described below.

(First condition) When $N_d = N_t$, the $N_d$ pieces of detection object information and the $N_t$ pieces of tracked object information are associated on a one-to-one basis. That is, the $N_t$ tracked objects currently tracked by the object tracking unit 30 are associated with the $N_d$ detection objects included in the image data on a one-to-one basis.

(Second condition) When $N_t < N_d$, $(N_d-N_t)$ pieces of detection object information among the $N_d$ pieces of detection object information are detection object information representing a new detection object. On the other hand, the $N_t$ pieces of detection object information among the $N_d$ pieces of detection object information are associated with the $N_t$ pieces of tracked object information on a one-to-one basis. That is, $(N_d-N_t)$ detection objects among the $N_d$ detection objects included in the image data are objects newly framed in the image data, and are not included in the $N_t$ tracked objects currently being tracked. On the other hand, the $N_t$ detection objects among the $N_d$ detection objects included in the image data are associated with the $N_t$ tracked objects currently being tracked on a one-to-one basis.

(Third condition) When $N_t > N_d$, the $(N_t-N_d)$ pieces of tracked object information of the $N_t$ pieces of tracked object information have no corresponding detection object information. On the other hand, the $N_d$ pieces of tracked object information among the $N_t$ pieces of tracked object information are associated with the $N_d$ pieces of detection object information on a one-to-one basis. That is, the $(N_t-N_d)$ tracked objects among the $N_t$ tracked objects are framed-out objects and are not included in the $N_d$ detection objects currently included in the image data. On the other hand, the $N_d$ tracked objects among the $N_t$ detection objects are associated with the $N_d$ detection objects included in the image data at the present time on a one-to-one basis.

Therefore, the object tracking unit 30 searches for a combination of values of decision variables that minimizes the cost function under the constraint conditions as described above, so that any detection object information determined to represent the same object among the one or more pieces of detection object information can be associated with each of the one or more pieces of tracked object information.

In the present embodiment, the formulation unit 36 incorporates the above-described constraint conditions into a cost function, thereby generating a combination optimization problem with a form expression that can be solved by a solver that solves a combination optimization problem without constraint. As a result, even when the solver unit 22 is a solver that solves the combination optimization problem without constraint, the solver unit 22 can output the solution to the combination optimization problem supplied from the formulation unit 36.

In the present embodiment, the formulation unit 36 generates a combination optimization problem for minimizing a total cost function obtained by adding a cost function and a penalty function as a problem in a form that can be solved by a solver that solves a combination optimization problem without constraint.

The penalty function is a function that includes at least some of the decision variables and has a minimum value when the solution satisfies the constraint condition. Specifically, the penalty function has the minimum value (for example, zero) in a case where the solution satisfies one or more constraint expressions representing the constraint condition, and has a value larger than the minimum value in a case where the values of the decision variables do not satisfy one or more constraint expressions.

In the present embodiment, the formulation unit 36 generates a total cost function represented by Expression (14).

$$H_{total} = H_{cost} + C_1 H_{penalty1} + C_2 H_{penalty2} \qquad \cdots (14)$$

$(C_1 H_{penalty1} + C_1 H_{penalty2})$ in Expression (14) represents a penalty function. $H_{penalty1}$ represents a first penalty function. $H_{penalty2}$ represents a second penalty function.

The first penalty function ($H_{penalty1}$) is represented by Expressions (15-1) and (15-2).

$$H_{penalty1} = \begin{cases} \left( \sum_{t=1}^{N_t} \left( \sum_{d=1}^{N_d} b_{t,d} - 1 \right) \right)^2, & (\text{When } N_d \geq N_t) \qquad \cdots (15\text{-}1) \\ \sum_{t=1}^{N_t} \left( \sum_{d \neq \acute{d}} b_{t,d} b_{t,\acute{d}} \right), & (\text{When } N_d < N_t) \qquad \cdots (15\text{-}2) \end{cases}$$

Expression (15-1) in the first penalty function ($H_{penalty1}$) is expressed by a quadratic function of the decision variable. Expression (15-1) has the minimum value (0 in this example) in a case where all of constraint expressions of $N_t$ equality expressions represented by Expression (12-1) satisfy the expression. In addition, Expression (15-1) has a larger value as the violation number, which is the number of constraint expressions in which the expressions are satisfied the expression among constraint expressions of $N_t$ equality expressions represented by (12-1), is larger.

Expression (15-2) in the first penalty function ($H_{penalty1}$) is expressed by a quadratic function of the decision variable. In a case where all of constraint expressions of $N_t$ equality expressions represented by Expression (12-2) satisfy the expression, the minimum value (0 in this example) is obtained. In addition, Expression (15-2) has a larger value as the violation number, which is the number of constraint expressions in which the expressions are satisfied among constraint expressions of $N_t$ equality expressions represented by (12-2), is larger.

The second penalty function ($H_{penalty2}$) is represented by Expressions (16-1) and (16-2).

$$H_{penalty2} = \begin{cases} \sum_{d=1}^{N_d} \left( \sum_{t=1}^{N_t} b_{t,d} - 1 \right)^2 , & \text{(When } N_d \leq N_t) \quad \cdots (16\text{-}1) \\ \sum_{d=1}^{N_d} \left( \sum_{t \neq \hat{t}} b_{t,d} b_{\hat{t},d} \right), & \text{(When } N_d > N_t) \quad \cdots (16\text{-}2) \end{cases}$$

Expression (16-1) in the second penalty function ($H_{penalty2}$) is expressed by a quadratic function of the decision variable. Expression (16-1) has the minimum value (0 in this example) in a case where all of constraint expressions of $N_d$ equality expressions represented by Expression (13-1) satisfy the expression. In addition, Expression (16-1) has a larger value as the violation number, which is the number of constraint expressions in which the expressions are satisfied among constraint expressions of $N_d$ equality expressions represented by (13-1), is larger.

Expression (16-2) in the second penalty function ($H_{penalty2}$) is expressed by a quadratic function of the decision variable. Expression (16-2) has the minimum value (0 in this example) in a case where all of constraint expressions of $N_d$ equality expressions represented by Expression (13-2) satisfy the expression. Expression (16-2) has a larger value as the violation number, which is the number of constraint expressions in which the expressions are not satisfied among the $N_d$ equality expressions represented by (13-2), is larger.

$C_1$ in Expression (14) is a first coupling coefficient by which the first penalty function is multiplied, and is a positive real number larger than zero. $C_2$ is a second coupling coefficient by which the second penalty function is multiplied, and is a positive real number larger than zero.

$C_1$ and $C_2$ are coefficients that determine the weight of the penalty function for the cost function. In a case where $C_1$ and $C_2$ are sufficiently large, the values of the decision variables at which the total cost function has the minimum value are the values of the decision variables at which the cost function has the minimum value among the values of the decision variables satisfying the constraint condition (constraint satisfaction solution). In a case where $C_1$ and $C_2$ are relatively small, the values of the decision variables at which the total cost function has the minimum value may be the values (constraint violation solutions) of the decision variables not satisfying the constraint condition. Therefore, $C_1$ and $C_2$ are appropriately adjusted based on both the improvement of the accuracy of object tracking at the normal time and the improvement of the occlusion handling ability.

The total cost function shown in Expression (14) as described above is expressed by a quadratic function of decision variables. Therefore, the solver unit 22 can output a solution to the problem for minimizing the total cost function shown in Expression (14) as long as it is a solver capable of solving the quadratic unconstrained binary optimization problem.

Note that the formulation unit 36 may generate a combination optimization problem for minimizing a total cost function different from the total cost function shown in Expression (14). For example, the formulation unit 36 may generate a combination optimization problem for minimizing a total cost function obtained by adding a cost function represented by a quadratic function of decision variables and a penalty function.

Moreover, the formulation unit 36 may generate a high-order unconstrained binary optimization (HUBO) problem for minimizing a total cost function obtained by adding a cost function that is a cubic function or higher-order function of the decision variables and a penalty function. However, in a case where the formulation unit 36 generates the HUBO problem, the solver unit 22 is required to be a solver capable of outputting a solution to the HUBO problem. A solver capable of outputting a solution to the HUBO problem can be implemented by executing a simulated bifurcation algorithm, for example, as shown in JP 2021-043667 A.

In the present embodiment, the constraint expression is expressed by an equality expression. However, the constraint expression may be expressed by an inequality expression. Moreover, in a case where the constraint condition is represented by constraint expressions, some of the constraint expressions may be equality expressions and the other may be inequality expressions.

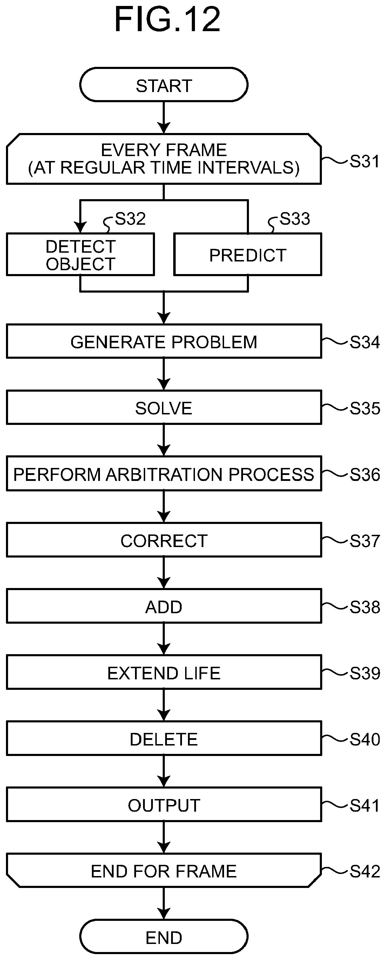

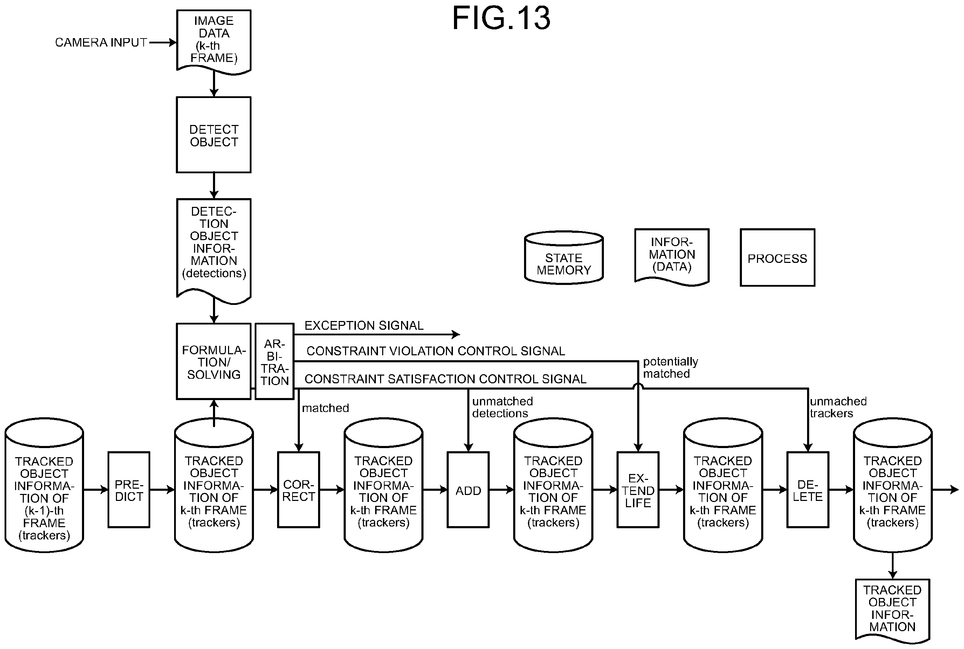

FIG. 12 is a flowchart illustrating a flow of processing of the object tracking device 14. FIG. 13 is a diagram illustrating a data flow graph of the object tracking device 14. Hereinafter, the processing and data flow of the object tracking device 14 will be described with reference to the flowchart of FIG. 12 and the data flow graph of FIG. 13. In the description of FIGS. 12 and 13, it is assumed that one or more pieces of detection unit information are detected in all the frames, and one or more pieces of tracked object information are included in the internal state information in all the frames.

The object tracking device 14 repeatedly executes the processing of S32 to S41 for each frame (repetitive processing between S31 and S42).

In S32, the object detection unit 26 of the object tracking device 14 performs the object detection processing on the image data of the k-th frame (k is an integer) acquired from the camera 12, and generates one or more pieces of detection object information (detections) representing one or more detection objects included in the k-th image data. Then, the acquisition unit 32 of the object tracking device 14 acquires one or more pieces of detection object information (detections) in the generated k-th frame.

In parallel with S32, in S33, the prediction unit 34 of the object tracking device 14 predicts one or more pieces of tracked object information representing one or more tracked objects in the k-th frame based on one or more pieces of tracked object information (trackers) indicating one or more tracked objects in the (k-1)-th frame included in the internal state information of the storage unit 28 (state memory). Then, the prediction unit 34 stores one or more pieces of the predicted tracked object information in the k-th frame in the storage unit 28. In this case, the prediction unit 34 increases the age included in each of the one or more pieces of tracked object information in the k-th frame by a predetermined value (for example, one).

Subsequently, in S34, the formulation unit 36 of the object tracking device 14 generates a combination optimization problem for the k-th frame based on one or more pieces of tracked object information in the k-th frame and one or more pieces of detection object information of the k-th frame.

Subsequently, in S35, the solver unit 22 of the object tracking device 14 acquires a combination optimization problem for the k-th frame. Then, the solver unit 22 solves the acquired combination optimization problem while allowing the constraint condition not to be satisfied.

Subsequently, in S36, the arbitration unit 38 of the object tracking device 14 executes an arbitration processing. Specifically, the arbitration unit 38 acquires a solution to the combination optimization problem for the k-th frame from the solver unit 22. Subsequently, the arbitration unit 38 evaluates the acquired solution. In a case where the acquired solution satisfies the constraint condition, the arbitration unit 38 outputs a constraint satisfaction control signal based on the solution satisfying the constraint condition. The constraint satisfaction control signal includes a matched signal (matched), an unmatched detection object signal (unmatched_detections), and an unmatched tracked object signal (unmatched_trackers).

In a case where the acquired solution does not satisfy the constraint condition and the acquired solution is a valid constraint violation solution close to the constraint satisfaction solution, the arbitration unit 38 identifies a constraint satisfaction portion that satisfies the constraint condition in the acquired solution and a constraint violation portion that does not satisfy the constraint condition in the solution. Then, in a case where the acquired solution does not satisfy the constraint condition and the acquired solution is a valid constraint violation solution, the arbitration unit 38 generates a constraint satisfaction control signal based on the constraint satisfaction portion and a constraint violation control signal based on the constraint violation portion. The constraint violation control signal includes a potentially matched signal (potentially_matched).

Moreover, in a case where the acquired solution does not satisfy the constraint condition and the acquired solution is not a valid constraint violation solution, the arbitration unit 38 outputs an exception signal.

Subsequently, in S37, the correction unit 40 of the object tracking device 14 acquires a matched signal included in the constraint satisfaction control signal. The correction unit 40 corrects, based on the associated detection object information, the tracked object information with which any of the one or more pieces of detection object information is associated among the one or more pieces of tracked object information in the k-th frame included in the internal state information stored in the storage unit 28 based on the matched signal. Further, the correction unit 40 corrects the age included in the associated tracked object information to the initial value (for example, zero).

Subsequently, in S38, the addition unit 42 of the object tracking device 14 acquires the unmatched detection object signal included in the constraint satisfaction control signal. The addition unit 42 adds, as new tracked object information, the detection object information not associated with any tracked object information among the one or more pieces of detection object information to the one or more pieces of tracked object information in the k-th frame included in the internal state information stored in the storage unit 28 based on the unmatched detection object signal. Moreover, the correction unit 40 sets the age included in the newly added tracked object information to an initial value (for example, zero).

Subsequently, in S39, the life extension unit 44 of the object tracking device 14 acquires a potentially matched signal included in the constraint violation control signal. The life extension unit 44 decreases the age in the tracked object information corresponding to the constraint violation portion among the one or more pieces of tracked object information in the k-th frame included in the internal state information stored in the storage unit 28 by a predetermined value (for example, one) based on the potentially matched signal.

Subsequently, in S40, the deletion unit 46 of the object tracking device 14 acquires the unmatched tracked object signal included in the constraint satisfaction control signal. The deletion unit 46 deletes tracked object information in which the age exceeds a predetermined threshold value (for example, one) among one or more pieces of tracked object information in the k-th frame included in the internal state information stored in the storage unit 28 based on the unmatched tracked object signal. In the processing of S39 of the k-th frame, the threshold value is set to such a value that the tracked object information in which the age is decreased by the predetermined value is not deleted at least in S40 of the k-th frame.

Subsequently, in S41, the output unit 48 of the object tracking device 14 outputs one or more pieces of tracked object information in the k-th frame included in the internal state information stored in the storage unit 28 to the planning device 16. Note that the output unit 48 may execute the output processing in all the frames, or may execute the output processing every predetermined number of frames or every time there is a request from the planning device 16.

The object tracking device 14 executes the above processing for each frame (repetitive processing between S31 and S42).

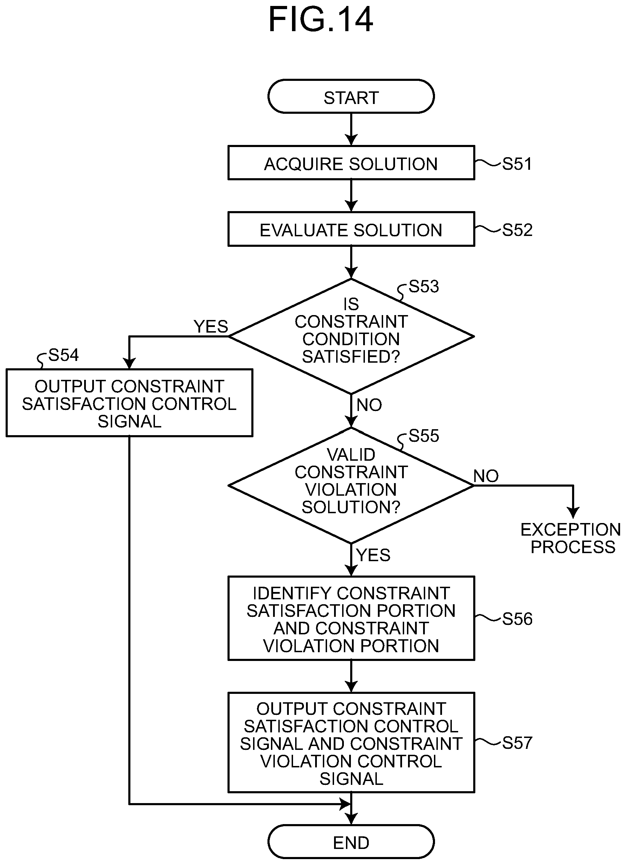

FIG. 14 is a flowchart illustrating a flow of processing of the arbitration unit 38. In a case where the solution is acquired from the solver unit 22, the arbitration unit 38 executes the arbitration processing in the flow illustrated in the flowchart of FIG. 14, for example.

First, in S51, the arbitration unit 38 acquires the solution output from the solver unit 22.

Subsequently, in S52, the arbitration unit 38 evaluates the acquired solution. Specifically, first, the arbitration unit 38 evaluates whether the solution satisfies the constraint condition. In a case where the solution does not satisfy the constraint condition, the arbitration unit 38 further evaluates whether the solution is a valid constraint violation solution.

For example, the constraint condition is represented by one or more constraint expressions each of which is an equality expression or an inequality expression including decision variables as arguments. In a case where the acquired solution satisfies all of one or more constraint expressions, the arbitration unit 38 evaluates that the solution satisfies the constraint condition. That is, in a case where the acquired solution satisfies all of one or more constraint expressions, the arbitration unit 38 evaluates that the acquired solution is a constraint satisfaction solution.

In a case where the acquired solution does not satisfy at least one of one or more constraint expressions, the arbitration unit 38 evaluates that the acquired solution is a constraint violation solution that does not satisfy the constraint condition.

Moreover, in a case where the acquired solution is a constraint violation solution, the arbitration unit 38 further evaluates whether the acquired solution is a valid constraint violation solution close to a constraint satisfaction solution. The arbitration unit 38 evaluates whether the acquired solution is a valid constraint violation solution based on a predetermined evaluation criterion.

For example, in a case where the acquired solution is substituted into each of one or more constraint expressions and the acquired solution is substituted into one or more constraint expressions, the arbitration unit 38 calculates the violation number, which is the number of constraint expressions in which the expressions are not satisfied. In a case where the violation number is equal to or less than a preset value, the arbitration unit 38 evaluates that the solution is a valid constraint violation solution.

In addition, for example, the arbitration unit 38 substitutes the acquired solution into the penalty function, and calculates a penalty value that is a value of the penalty function in a case where the acquired solution is substituted. In a case where the penalty value is equal to or less than a preset value, the arbitration unit 38 may evaluate that the solution is a valid constraint violation solution.

In S53, the arbitration unit 38 determines whether the acquired solution satisfies the constraint condition based on the evaluation result. In a case where the acquired solution satisfies the constraint condition (Yes in S53), the arbitration unit 38 advances the processing to S54. Then, in S54, the arbitration unit 38 generates and outputs a constraint satisfaction control signal based on the acquired solution. When the processing of S54 ends, the arbitration unit 38 ends this flow.

In a case where the acquired solution does not satisfy the constraint condition (No in S53), the arbitration unit 38 advances the processing to S55. In S55, the arbitration unit 38 determines whether the acquired solution is a valid constraint violation solution based on the evaluation result. When the acquired solution is not a valid constraint violation solution (No in S55), the arbitration unit 38 outputs an exception signal for executing the exception processing, and ends this flow.

In a case where the acquired solution is a valid constraint violation solution (Yes in S55), the arbitration unit 38 advances the processing to S56.

In S56, the arbitration unit 38 identifies the constraint satisfaction portion and the constraint violation portion in the valid constraint violation solution.

For example, the arbitration unit 38 identifies a decision variable as a factor by which the constraint condition is not satisfied among the decision variables based on the acquired solution. Then, the arbitration unit 38 identifies the constraint satisfaction portion by changing the value of the decision variable as a factor as a factor by which the constraint condition is not satisfied. In addition, the arbitration unit 38 extracts the value of the decision variable as a factor by which the constraint condition is not satisfied, and identifies the value as the constraint violation portion.

For example, in a case where the value of the decision variable as a factor by which the constraint condition is not satisfied is zero, the arbitration unit 38 changes the value to one, and in a case where the value of the decision variable is one, the arbitration unit 38 changes the value to zero. Then, for example, in a case where the solution after changing the value of the decision variable as a factor by which the constraint condition is not satisfied, the arbitration unit 38 identifies, as the constraint satisfaction portion, the solution after changing the value of the decision variable as a factor by which the constraint condition is not satisfied. In addition, for example, in a case where the solution after changing the value of the decision variable as a factor by which the constraint condition is not satisfied satisfies the constraint condition, the arbitration unit 38 identifies the decision variable whose value has changed as the decision variable as a factor by which the constraint condition is not satisfied.

For example, as illustrated in FIG. 9, the arbitration unit 38 determines whether the values of the decision variables disposed in the matrix satisfy the constraint condition for each column (or each row). Then, the arbitration unit 38 identifies a column (or row) not satisfying the constraint condition. Subsequently, the arbitration unit 38 inverts the value of any decision variable among the decision variables included in the column (or row) determined not to satisfy the constraint condition so as to satisfy the constraint condition. In a case where the constraint condition is satisfied as a result of the inversion, the arbitration unit 38 identifies the decision variable the value of which is inverted as a factor by which the constraint condition is not satisfied. In a case where there are two or more decision variables that change to satisfy the constraint condition by being inverted in the column (or row) determined not to satisfy the constraint condition, the arbitration unit 38 may determine the decision variable as a factor by which the constraint condition is not satisfied, on the basis of the corresponding coefficient. For example, the arbitration unit 38 may preferentially select a decision variable having the smallest corresponding IOU as a decision variable as a factor by which the constraint condition is not satisfied.

Subsequently, in S57, the arbitration unit 38 generates and outputs a constraint satisfaction control signal based on the constraint satisfaction portion and a constraint violation control signal based on the constraint violation portion. When the processing of S57 ends, the arbitration unit 38 ends this flow.

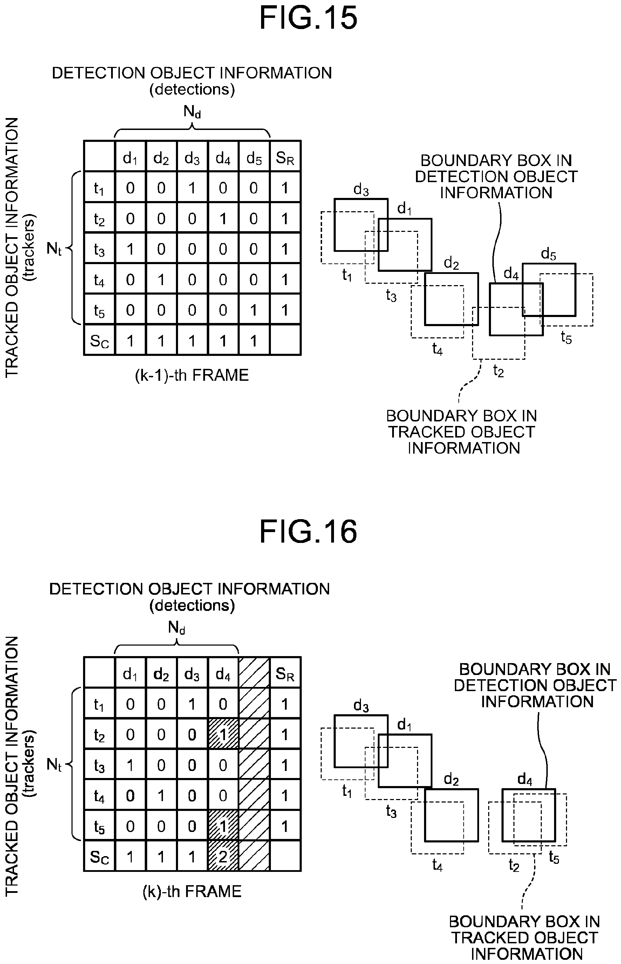

Next, the arbitration processing, the correction processing, the addition processing, the life extension processing, the deletion processing, and the occlusion countermeasure capability will be described with reference to specific examples illustrated in FIGS. 15 to 18.

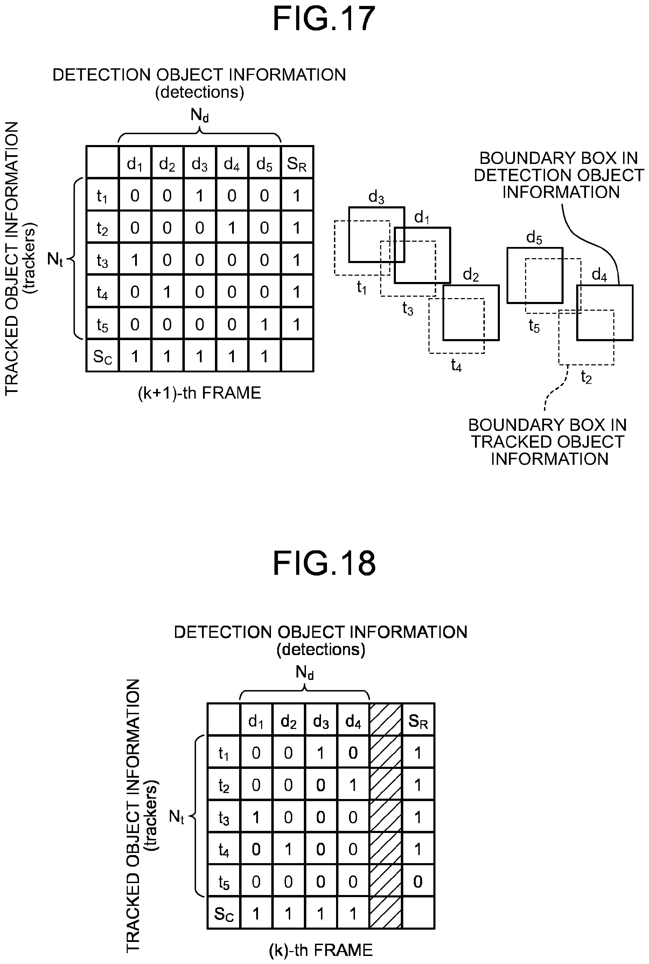

FIG. 15 is a diagram illustrating an example of a boundary box indicated by each of the detection object information and the tracked object information and a solution in the (k-1)-th frame. FIG. 16 is a diagram illustrating an example of a boundary box indicated by each of the detection object information and the tracked object information and a solution in the k-th frame. FIG. 17 is a diagram illustrating an example of a boundary box indicated by each of the detection object information and the tracked object information and a solution in the (k+1)-th frame. FIG. 18 is a diagram illustrating an example of the constraint satisfaction portion identified in the k-th frame.

In FIGS. 15 to 18, Sc represents the sum of the values of the decision variables in the column direction. In FIGS. 15 to 18, $S_R$ represents the sum of the values of the decision variables in the row direction.

First, the arbitration processing will be described.

In the k-th frame, as illustrated in FIG. 16, $N_d < N_t$. When $N_d < N_t$, the solution may be a valid constraint violation solution. In a case where the solution is a valid constraint violation solution, the arbitration unit 38 can identify the constraint violation portion from the solution.

First, since $N_d < N_t$ in the k-th frame, the arbitration unit 38 determines whether the solution of the k-th frame satisfies the constraint condition based on Expressions (12-2) and (13-1). As illustrated in FIG. 16, in the solution of the k-th frame, the sum (Sc) in the column direction in the fourth column ($d_4$) is two, and does not satisfy Expression (13-1).

Subsequently, the arbitration unit 38 determines whether the solution of the k-th frame is a valid constraint violation solution. For example, the arbitration unit 38 determines that the solution is a valid constraint violation solution in a case where the violation number of the k-th frame solution is equal to or less than a preset value (max_violation). In this example, the preset value (max_violation) is assumed to be one. Note that the preset value may be one or more. The solution of the k-th frame has a violation number of one. Therefore, the arbitration unit 38 determines that the k-th frame solution is a valid constraint violation solution.

Subsequently, the arbitration unit 38 identifies the constraint violation portion and the constraint satisfaction portion from the solution of the k-th frame. In the solution of the k-th frame, the sum (Sc) in the column direction in the fourth column ($d_4$) violates the constraint condition. In ($d_4$) in the fourth column, each of the decision variable of ($t_2$, $d_4$) and the decision variable of ($t_5$, $d_4$) are one, and it is not possible to identify which tracked object information of $t_2$ and $t_5$ the detection object information indicated by $d_4$ is associated with. Therefore, the solution of the k-th frame satisfies the constraint condition by inverting any value of the decision variable of ($t_2$, $d_4$) or the decision variable of ($t_5$, $d_4$). For example, the arbitration unit 38 compares the IOU($t_2$, $d_4$) corresponding to the decision variable of ($t_2$, $d_4$) with the IOU($t_5$, $d_4$) corresponding to the decision variable of ($t_5$, $d_4$), and identifies the smaller decision variable as the constraint violation portion. In this example, it is assumed that IOU($t_2$, $d_4$) > IOU($t_5$, $d_4$). Therefore, in the present example, the arbitration unit 38 identifies the decision variable of ($t_5$, $d_4$) as the constraint violation portion. Further, the arbitration unit 38 identifies a solution obtained by inverting the value of the decision variable of $(t_5, d_4)$ from one to zero as illustrated in FIG. 18 as the constraint satisfaction portion.

Then, the arbitration unit 38 generates and outputs a potentially matched signal (potentially_matched) included in the constraint violation control signal based on the tracked object information indicated in the constraint violation portion. In addition, the arbitration unit 38 generates and outputs a matched signal (matched) included in the constraint satisfaction control signal based on the detection object information and the tracked object information associated on a one-to-one basis in the constraint satisfaction portion. In addition, the arbitration unit 38 generates and outputs an unmatched tracked object signal (unmatched_trackers) included in the constraint satisfaction control signal based on the tracked object information with which the detection object information in the constraint satisfaction portion is not associated. In addition, the arbitration unit 38 generates and outputs an unmatched detection object signal (unmatched_detections) included in the constraint satisfaction control signal based on the detection object information with which the tracked object information in the constraint satisfaction portion is not associated.

In the k-th frame illustrated in FIG. 18, the arbitration unit 38 generates a matched signal indicating the detection object information and the tracked object information corresponding to the decision variable indicated by each of $(t_1, d_3)$, $(t_2, d_4)$, $(t_3, d_1)$, and $(t_4, d_2)$. Further, in the k-th frame illustrated in FIG. 18, the arbitration unit 38 generates an unmatched tracked object signal indicating the tracked object information $(t_5)$ corresponding to the decision variable of $(t_5, d_4)$. In the k-th frame shown in FIG. 18, since there is no newly framed detection object in the image data, the arbitration unit 38 does not output the unmatched detection object signal.

In the k-th frame in FIG. 18, the arbitration unit 38 generates the potentially matched signal indicating the tracked object information corresponding to the decision variable of $(t_5, d_4)$. That is, the tracked object information of $t_5$ is identified as a state in which the corresponding detection object information does not exist and at the same time, the detection object information temporarily associated by occlusion does not exist.

Next, the correction processing, the addition processing, the life extension processing, and the deletion processing will be described.

At the start of the k-th frame, it is assumed that the internal state information includes five pieces of tracked object information ($t_1$ to $t_5$) as illustrated in FIG. 16. In each of the five pieces of tracked object information ($t_1$ to $t_5$), it is assumed that the age ($age_i$) is zero immediately before the start of the k-th frame. Then, for each of the five pieces of tracked object information ($t_1$ to $t_5$), one is added to the age ($age_i$) by the prediction processing by the prediction unit 34 after the start of the k-th frame.

The correction unit 40 corrects each of the four pieces of tracked object information ($t_1, t_2, t_3, t_4$) indicated by the matched signal among the five pieces of tracked object information ($t_1$ to $t_5$) included in the internal state information based on the Kalman filter theory according to the associated detection object information ($d_1, d_2, d_3, d_4$). More specifically, the correction unit 40 corrects the tracked object information indicated by $t_1$ by the associated detection object information indicated by $d_3$. Further, the correction unit 40 corrects the tracked object information indicated by $t_2$ by the associated detection object information indicated by $d_4$. In addition, the correction unit 40 corrects the tracked object information indicated by $t_3$ by the associated detection object information indicated by $d_1$. In addition, the correction unit 40 corrects the tracked object information indicated by $t_4$ by the associated detection object information indicated by $d_2$.

Further, the correction unit 40 returns the age ($age_i$) of the four pieces of tracked object information ($t_1, t_2, t_3, t_4$) indicated by the matched signal to the initial value of zero.

The addition unit 42 acquires an unmatched detection object signal indicating tracked object information representing a detection object newly framed in the image data when $N_d > N_t$. Then, the addition unit 42 adds the tracked object information indicated by the unmatched detection object signal to the internal state information as new tracked object information. In addition, the addition unit 42 sets the age ($age_i$) of the added tracked object information to zero as an initial value. However, since there is no newly framed detection object in the image data in the k-th frame illustrated in FIG. 16, the addition unit 42 does not receive the unmatched detection object signal and does not add new tracked object information to the internal state information.

The life extension unit 44 decreases the age of the tracked object information ($t_5$) indicated by the potentially matched signal among the five pieces of tracked object information ($t_1$ to $t_5$) included in the internal state information by a predetermined value (anti-aging). In this example, the predetermined value (anti-aging) is one. In the k-th frame illustrated in FIG. 16, the life extension unit 44 subtracts one from the age ($age_i$) in the tracked object information indicated by $t_5$ to zero.

The deletion unit 46 deletes, among the five pieces of tracked object information ($t_1$ to $t_5$) included in the internal state information, the tracked object information ($t_5$) that is indicated in the unmatched tracked object signal and in which the age is larger than a preset threshold value (max_age). In the present example, the threshold value is assumed to be one. In the k-th frame illustrated in FIG. 16, the unmatched tracked object signal indicates the tracked object information of $t_5$. However, the age of the tracked object information indicated by $t_5$ is set to zero by the life extension unit 44, and is smaller than the threshold value. Therefore, the deletion unit 46 does not delete the tracked object information indicated by $t_5$.

Note that, for example, unlike the example illustrated in FIG. 16, it is assumed that the arbitration unit 38 acquires the solution illustrated in FIG. 18 from the solver unit 22 in the k-th frame. In this case, the arbitration unit 38 does not output the potentially matched signal in the k-th frame. Therefore, the age of the tracked object information indicated by ts is not reduced by the life extension unit 44. Therefore, in this case, the deletion unit 46 deletes the tracked object information indicated by ts.

Next, occlusion countermeasure capability of the object tracking unit 30 will be described.

As indicated by the boundary boxes in FIGS. 15, 16, and 17, the tracked object corresponding to the tracked object information of $t_2$ has moved from left to right. In addition, the tracked object corresponding to the tracked object information of ts has moved from the lower right to the upper left.

As illustrated in FIG. 16, the tracked object of $t_2$ and the tracked object of ts intersect in the k-th frame. As a result, the tracked object of ts is hidden behind the tracked object of $t_2$, and occlusion occurs. Therefore, in the k-th frame, the detection object of $d_4$ corresponding to the tracked object of $t_2$ is included in the image data. However, in the k-th frame, the detection object corresponding to the ts tracked object is not included in the image data. However, the object tracking unit 30 does not delete the tracked object information indicated by ts in the k-th frame by decreasing the age of the tracked object information indicated by ts by the predetermined value by detecting the valid constraint violation solution.

Subsequently, as illustrated in FIG. 17, the occlusion of the tracked object of ts is resolved in the (k+1)-th frame. As a result, in the (k+1)-th frame, the image data includes five detection objects. Therefore, the five pieces of tracked object information included in the internal state information and the five pieces of detection object information detected from the k-th frame can have a one-to-one correspondence. The track object information of $t_5$ in the (k-1)-th frame and the tracked object information of $t_5$ in the (k+1)-th frame are the same identification information. Therefore, the object tracking unit 30 can identify the tracked object information of $t_5$ of the (k-1)-th frame in FIG. 15 and the tracked object information of ts of the (k+1)-th frame in FIG. 16 as information representing the same object regardless of occlusion occurring in the k-th frame. Therefore, the object tracking unit 30 can keep tracking the tracked object indicated by the tracked object information of $t_5$ in the (k+1)-th frame continuously from the (k-1)-th frame regardless of the occlusion generated in the k-th frame. As described above, the object tracking unit 30 can have an occlusion countermeasure capability.

On the other hand, unlike the above example, in the k-th frame, it is assumed that the solver unit 22 outputs a solution as illustrated in FIG. 18, and the object tracking unit 30 does not detect a valid constraint violation solution. In this case, the object tracking unit 30 deletes the tracked object information indicated by ts in the k-th frame. As a result, at the start time point of the (k+1)-th frame, the internal state information includes four pieces of tracked object information. Therefore, the object tracking unit 30 adds new tracked object information corresponding to the detection object information indicated by $d_5$ to the internal state information with new identification information (for example, $t_6$) in the (k+1)-th frame. Therefore, the object tracking unit 30 cannot identify the tracked object information indicated by ts in the (k-1)-th frame and the tracked object information indicated by $t_6$ in the (k+1)-th frame as information representing the same object due to the influence of occlusion occurring in the k-th frame. Therefore, in a case where a valid constraint violation solution is not detected, the object tracking unit 30 terminates the tracking of the tracked object indicated by the tracked object information of ts due to the influence of occlusion occurring in the k-th frame. As described above, in a case where a valid constraint violation solution is not detected, the object tracking unit 30 does not have the occlusion countermeasure capability.

As described above, the object tracking unit 30 according to the present embodiment does not extend the life of all the tracked object information included in the internal state information, but extends the life of the tracked object information corresponding to the tracked object in which the event for which countermeasure against occlusion should be taken has occurred. As a result, the object tracking unit 30 according to the present embodiment can have occlusion countermeasure capability while suppressing an unnecessary increase in the number of pieces of tracked object information. Therefore, the object tracking unit 30 according to the present embodiment suppresses enlargement of the prediction processing and the matching processing, and does not cause deterioration in processing performance of object tracking.

Specifically, the object tracking unit 30 solves a no-constraint combination optimization problem for minimizing the total cost function ($H_{total}$) shown in Expression (14) using a heuristic solution, thereby identifying the tracked object information for which countermeasure against occlusion is required. For example, in the constraint violation solution illustrated in FIG. 16, the fact that the decision variable of ($t_5$, $d_4$) is one indicates that the IOU($t_5$, $d_4$) is approximately equal to or larger than the value (the multiplication value of Expression (16-2) and the coupling coefficient ($C_2$)) of the second penalty function ($H_{penalty2}$). As illustrated in FIG. 16, the constraint violation solution in which each of the decision variable of ($t_2$, $d_4$) and the decision variable of ($t_5$, $d_4$) is one corresponds to the determination that it is appropriate to interpret that both the tracked object corresponding to the tracked object information of $t_2$ and the tracked object corresponding to the tracked object information of $t_4$ coincide with the detection object corresponding to the tracked object information of $d_4$ from the viewpoint of the total cost function. Such a constraint violation solution corresponds to a situation where the tracked objects for which countermeasure against occlusion is required intersect with each other. Therefore, as described above, the object tracking unit 30 can identify the tracked object information for which countermeasure against occlusion is required by solving the no-constraint combination optimization problem for minimizing the total cost function ($H_{total}$) shown in Expression (14) using a heuristic solution.

As described above, the object tracking device 14 according to the present embodiment can improve performance or efficiency of the information processing function by using the constraint violation solution found in the combination optimization problem.

In the above example, the arbitration unit 38 determines that the solution is a valid constraint violation solution in a case where the violation number is one or less. Alternatively, the arbitration unit 38 may determine that the solution is a valid constraint violation solution in a case where the violation number is equal to or less than a predetermined value larger than two. As a result, the object tracking unit 30 can have occlusion countermeasure capabilities for tracked objects.

Also, in the example described above, the life extension unit 44 decreases the age of the tracked object information indicated in the potentially matched signal by one. Alternatively, the life extension unit 44 may decrease the age of the tracked object information indicated in the potentially matched signal by two or more. As a result, the object tracking unit 30 can have long-term occlusion countermeasure capability.

Moreover, in the above-described example, the deletion unit 46 sets one as the threshold value (max_age). Alternatively, the deletion unit 46 may set a value of two or more as the threshold value (max_age). In this case, the object tracking unit 30 can have a certain occlusion countermeasure capability for all the tracked object information. Moreover, the object tracking unit 30 has long-term occlusion countermeasure capability for the tracked object information, for which countermeasure against occlusion is required, identified by the constraint violation solution. However, in a case where the threshold value (max_age) is excessively increased, the object tracking unit 30 allows the tracked object information to be essentially deleted to remain in the internal state information. Therefore, in a case where the threshold value (max_age) is increased, the object tracking unit 30 increases the number of pieces of tracked object information, leading to enlargement of the prediction processing and the matching processing, and as a result, there is a possibility of leading to deterioration of processing performance of object tracking.

Moreover, each of the one or more pieces of tracked object information may include an individual threshold value ($max\_age_i$) for deleting the tracked object information. In a case where each of the one or more pieces of tracked object information is added or modified, an individual threshold value is set to an initial value (for example, zero). In this case, the deletion unit 46 compares the age included in the tracked object information indicated by the unmatched tracked object signal with the individual threshold value, and deletes the tracked object information in a case where the age exceeds the threshold value. In this case, instead of decreasing the age included in the tracked object information indicated by the potentially matched signal by the predetermined value, the life extension unit 44 increases the threshold value included in the tracked object information indicated by the potentially matched signal by the predetermined value.

First modification

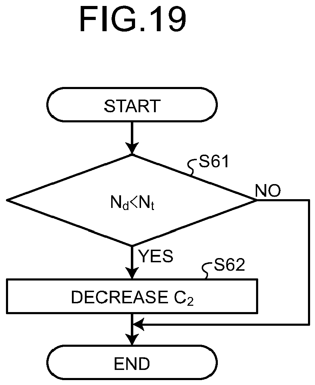

FIG. 19 is a diagram illustrating processing of the formulation unit 36 according to the first modification.

The formulation unit 36 may execute the processing illustrated in FIG. 19 before transmitting, to the solver unit 22, the combination optimization problem for minimizing the total cost function ($H_{total}$) indicated in Expression (14).

First, in S61, the formulation unit 36 determines whether $N_d$, which is the number of pieces of the one or more pieces of detection object information, is larger than $N_t$, which is the number of pieces of the one or more pieces of tracked object information included in the internal state information. When $N_d < N_t$ (Yes in S61), the formulation unit 36 advances the processing to S62.

In S62, the formulation unit 36 decreases the coupling coefficient ($C_2$) of the second penalty function ($H_{penalty2}$) included in the total cost function ($H_{total}$) by a predetermined value. Upon completion of the processing of S62, the formulation unit 36 transmits a combination optimization problem for minimizing the total cost function ($H_{total}$) to the solver unit 22.

Moreover, when $N_d < N_t$ is not satisfied (No in S61), the formulation unit 36 transmits a combination optimization problem for minimizing the total cost function ($H_{total}$) to the solver unit 22 without changing the coupling coefficient ($C_2$).

In this manner, the formulation unit 36 makes $C_2$ smaller when $N_t > N_d$ than when $N_t \leq N_d$. As a result, the formulation unit 36 can suppress the occurrence of the constraint violation solution in a case where occlusion does not occur, that is, when $N_t \leq N_d$. Then, in a case where there is a possibility that occlusion has occurred, and the life of the tracked object information using a valid constraint violation solution is extended, that is, when $N_t < N_d$, the formulation unit 36 can reduce the degree of influence of the second penalty function, and can easily generate the constraint violation solution.

The formulation unit 36 may be configured to increase coupling coefficient ($C_2$) when $N_d < N_t$ is not satisfied (No in S61), and not to change coupling coefficient ($C_2$) when $N_d < N_t$ (Yes in S61). Moreover, instead of the formulation unit 36, the preprocessing unit 54 of the solver unit 22 may execute the processing illustrated in FIG. 19. In this case, the formulation unit 36 determines whether $N_d < N_t$ in a case where the combination optimization problem received from the formulation unit 36 is converted into an Ising problem, and decreases $C_2$ when $N_d < N_t$.

Second modification

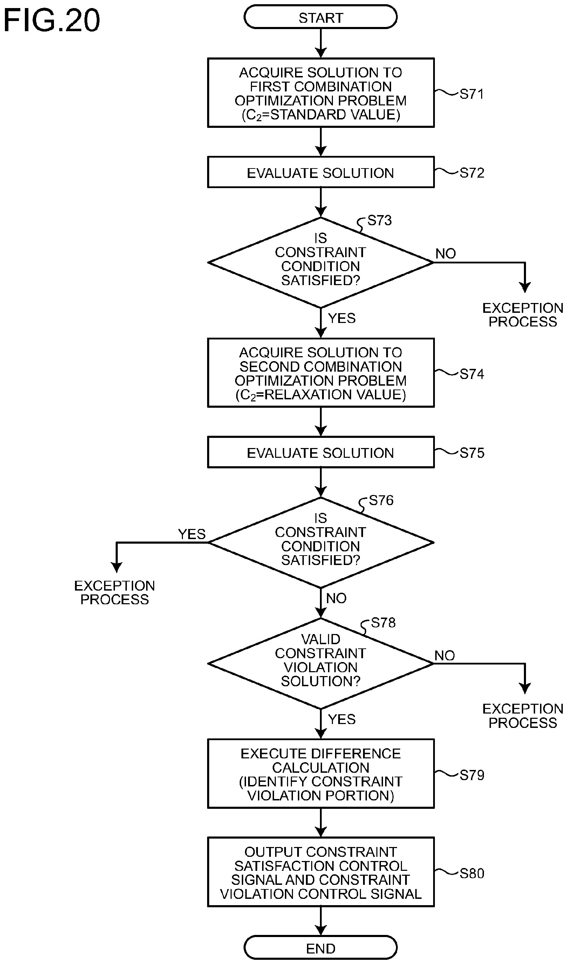

FIG. 20 is a diagram illustrating processing of the arbitration unit 38 according to the second modification.

The formulation unit 36 may generate a first combination optimization problem in which the coupling coefficient ($C_2$) of the second penalty function ($H_{penalty2}$) in the total cost function ($H_{total}$) is set as a standard value and a second combination optimization problem in which the coupling coefficient ($C_2$) of the second penalty function ($H_{penalty2}$) in the total cost function ($H_{total}$) is set as a relaxation value. The relaxation value is smaller than the standard value. That is, the first combination optimization problem has a larger ratio of the penalty function to the cost function than the second combination optimization problem.

Then, the formulation unit 36 supplies the first combination optimization problem and the second combination optimization problem to the solver unit 22.

The solver unit 22 solves each of the first combination optimization problem and the second combination optimization problem. Then, the solver unit 22 supplies the solution to the first combination optimization problem and the solution to the second combination optimization problem to the arbitration unit 38.

In the second modification, the arbitration unit 38 executes the processing in the flow illustrated in FIG. 20.

First, in S71, the arbitration unit 38 acquires a solution to the first combination optimization problem output from the solver unit 22. Subsequently, in S72, the arbitration unit 38 evaluates the solution to the acquired first combination optimization problem. Specifically, the arbitration unit 38 evaluates whether the solution to the acquired first combination optimization problem satisfies the constraint condition.

Subsequently, in S73, the arbitration unit 38 determines whether the solution to the first combination optimization problem satisfies the constraint condition based on the evaluation result. When the solution to the first combination optimization problem does not satisfy the constraint condition (No in S73), the arbitration unit 38 outputs an exception signal and ends this flow.

In a case where the solution to the first combination optimization problem satisfies the constraint condition (Yes in S73), the arbitration unit 38 advances the processing to S74.

In S74, the arbitration unit 38 acquires a solution to the second combination optimization problem output from the solver unit 22. Subsequently, in S75, the arbitration unit 38 evaluates the solution to the second combination optimization problem. The arbitration unit 38 performs, for example, the evaluation processing similar to that in S52 of FIG. 14. Note that the arbitration unit 38 may execute the processing of S74 and S75 in parallel with the processing of S71 and S72.

Subsequently, in S76, the arbitration unit 38 determines whether the solution to the second combination optimization problem satisfies the constraint condition based on the evaluation result. In a case where the solution to the second combination optimization problem satisfies the constraint condition (Yes in S76), the arbitration unit outputs an exception signal, and ends this flow.

In a case where the solution to the second combination optimization problem does not satisfy the constraint condition (No in S76), the arbitration unit 38 advances the processing to S78. In S78, the arbitration unit 38 determines whether the solution to the second combination optimization problem is a valid constraint violation solution based on the evaluation result. In a case where the solution to the second combination optimization problem is not a valid constraint violation solution (No in S78), the arbitration unit 38 outputs an exception signal and ends this flow.

In a case where the solution to the second combination optimization problem is a valid constraint violation solution (Yes in S78), the arbitration unit 38 advances the processing to S79.

In S79, the arbitration unit 38 identifies the constraint satisfaction portion and the constraint violation portion in the valid constraint violation solution. Specifically, the arbitration unit 38 identifies the constraint violation portion based on the difference between the solution to the first combination optimization problem and the solution to the second combination optimization problem. Further, the arbitration unit 38 identifies the solution to the first combination optimization problem as the constraint satisfaction portion.

Subsequently, in S80, the arbitration unit 38 generates and outputs a constraint satisfaction control signal based on the constraint satisfaction portion and a constraint violation control signal based on the constraint violation portion. When the processing of S80 ends, the arbitration unit 38 ends this flow.

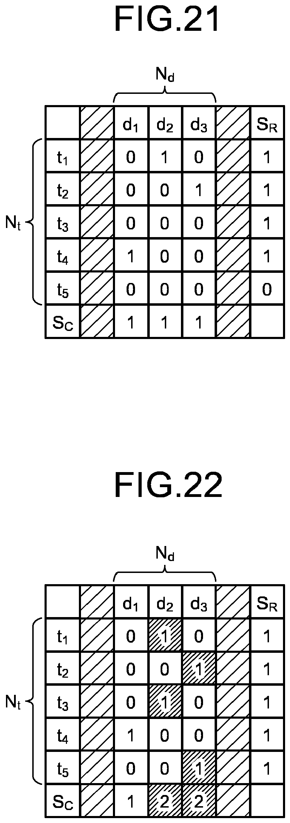

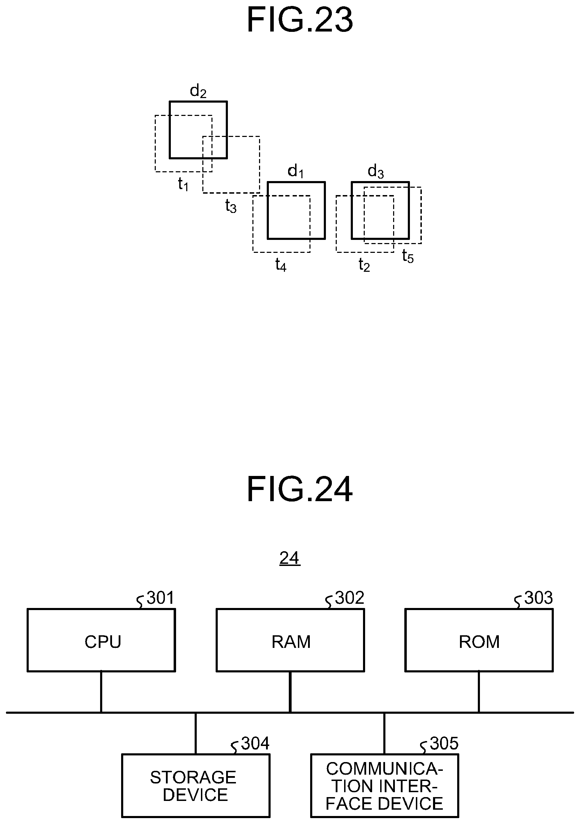

FIG. 21 is a diagram illustrating an example of a solution to the first combination optimization problem. FIG. 22 is a diagram illustrating an example of a solution to the second combination optimization problem. FIG. 23 is a diagram illustrating an example of the boundary box in a case where the solutions of FIGS. 21 and 22 are obtained.

The object tracking unit 30 according to the second modification acquires solutions of two combination optimization problems in which the coupling coefficient ($C_2$) of the penalty function is changed. A constraint violation solution is less likely to occur in a combination optimization problem having a large coupling coefficient ($C_2$) than in a combination optimization problem having a small coupling coefficient ($C_2$). The object tracking unit 30 identifies the constraint satisfaction portion using the solution to the first combination optimization problem having a large coupling coefficient ($C_2$). In addition, the object tracking unit 30 identifies a constraint violation portion by using a difference between the solution to the first combination optimization problem having a large coupling coefficient ($C_2$) and the solution to the second combination optimization problem having a small coupling coefficient ($C_2$). The object tracking unit 30 according to the second modification can easily identify the constraint violation portion and the constraint satisfaction solution even in a case where the valid constraint violation solution includes the two or more decision variables as factors of the constraint violation.

For example, as illustrated in FIGS. 21 and 22, it is assumed that five pieces of tracked object information are included in the internal state information, and three pieces of detection object information are detected based on the image data. In this case, as illustrated in FIG. 23, the tracked object of $t_2$ and the tracked object of ts intersect, and the tracked object of $t_1$ and the tracked object of $t_3$ intersect. Each of the sum (Sc) in the column direction in the second column ($d_2$) and the sum (Sc) in the column direction in the third column ($d_3$) is two, and the solution to the second combination optimization problem illustrated in FIG. 22 does not satisfy Expression (13-1). Even in such a case, the arbitration unit 38 can determine that the decision variable of ($t_3$, $d_2$) and the decision variable of ($t_5$, $d_3$) are factors of the constraint violation by detecting the difference between the solution to the first combination optimization problem illustrated in FIG. 21 and the solution to the second combination optimization problem illustrated in FIG. 22. Therefore, the arbitration unit 38 can output the constraint violation control signal including a potentially matched signal (potentially_matched) indicating the tracked object information of $t_3$ and the tracked object information of ts.

Note that, in the second modification, the solver unit 22 may include, for example, two Ising machines 52, and may solve the first combination optimization problem and the second combination optimization problem simultaneously in parallel. As a result, the solver unit 22 can execute two solving processing in parallel to output a solution in a short time. In addition, the solver unit 22 may sequentially execute two solving processing by one Ising machine 52. Such a solver unit 22 can reduce the circuit configuration and suppress the manufacturing cost and the like.

Application to information processing system

As described above, the object tracking device 14 according to the present embodiment executes the following series of processing.

First, the formulation unit 36 of the object tracking device 14 according to the present embodiment generates a combination optimization problem based on data under a predetermined constraint condition. For example, the object tracking device 14 generates a combination optimization problem for minimizing a total cost function obtained by adding a cost function and a penalty function. Moreover, the solver unit 22 of the object tracking device 14 according to the present embodiment acquires the generated combination optimization problem, solves the acquired combination optimization problem while allowing the constraint condition not to be satisfied, and calculates a solution to the combination optimization problem obtained by solving the combination optimization problem.

In addition, the object tracking device 14 according to the present embodiment generates the constraint violation control signal in a case where the solution does not satisfy the constraint condition. Then, the object tracking device 14 according to the present embodiment executes a predetermined first processing on the data based on the constraint violation control signal to output the data on which the first processing has been executed. Further, in a case where the solution satisfies the constraint condition, the object tracking device 14 according to the present embodiment executes a predetermined second processing on the data based on the solution to output the data on which the second processing has been executed.

In addition, in a case where the solution does not satisfy the constraint condition, the arbitration unit 38 of the object tracking device 14 according to the present embodiment identifies a constraint violation portion that does not satisfy the constraint condition in the solution and a constraint satisfaction portion that satisfies the constraint condition in the solution to output a constraint violation control signal based on the constraint violation portion and a constraint satisfaction control signal based on the constraint satisfaction portion. Then, in a case where the solution does not satisfy the constraint condition, the object tracking device 14 according to the present embodiment executes the first processing on the data based on the constraint violation control signal, outputs the data on which the first processing has been executed, executes the second processing on the data based on the constraint satisfaction control signal, and outputs the data on which the second processing has been executed.

Moreover, in a case where the solution satisfies the constraint condition, the object tracking device 14 according to the present embodiment further executes a predetermined second processing on the data based on the solution to output the data on which the second processing has been executed.

Note that an information processing system including processing of solving a combination optimization problem based on data under a predetermined constraint condition during execution of the processing on data can execute a series of processing as described above.

For example, the control device that analyzes the large-scale point group data output from the LiDAR by solving the constrained combination optimization problem and controls the object to be controlled according to the analysis result can execute the above series of processing.

Moreover, for example, a radio base station that solves a constrained combination optimization problem of allocating wireless communication resources such as frequency channels and time slots to a large number of terminal devices and allocates radio resources to a large number of terminal devices based on a solution to the constrained combination optimization problem can execute the above series of processing.

Moreover, for example, in a wireless communication system that includes a plurality of transmission antennas and a plurality of reception antennas and can use a plurality of frequency channels as wireless communication paths, a control device in the wireless communication system that selects an optimal wireless communication path by solving a constrained combination optimization problem can execute a series of processing as described above.

In addition, for example, a financial market analysis device that extracts the largest independent set of one or more stocks having a weak correlation with each other based on a graph including nodes corresponding to a plurality of stocks and edges corresponding to a correlation between two stocks can execute a series of processing as described above.

In addition, for example, in a control device of a large-scale computer machine system including a large number of calculation nodes, the control apparatus simultaneously processing a large number of jobs, the control apparatus that executes dynamic allocation of calculation resources to jobs by solving a constrained combination optimization problem can execute a series of processing as described above.

Hardware configuration

FIG. 24 is a diagram illustrating an example of a hardware configuration of the host unit 24. The host unit 24 is implemented by, for example, a computer having a hardware configuration as illustrated in FIG. 24. The host unit 24 includes a central processing unit (CPU) 301, a random access memory (RAM) 302, a read only memory (ROM) 303, a storage device 304, and a communication interface device 305. These units are connected by a bus.

The CPU 301 is a hardware processor that executes arithmetic processing, control processing, and the like according to a program. The CPU 301 uses a predetermined area of the RAM 302 for a work area, and executes various processing in cooperation with computer programs stored in the ROM 303, the storage device 304, and so forth.

The RAM 302 is a memory such as a synchronous dynamic random access memory (SDRAM). The RAM 302 functions as a work area of the CPU 301. The ROM 303 is a memory that stores programs and various types of information in a non-rewritable manner.

The storage device 304 is a device that writes and reads data to and from a semiconductor storage medium such as a flash memory, a magnetically or optically recordable storage medium, or the like. The storage device 304 writes and reads data to and from the storage medium under the control of the CPU 301. The communication interface device 305 communicates with an external device via a network in accordance with control from the CPU 301.

The program executed by the computer causes the computer to function as the host unit 24. This program is developed on the RAM 302 and executed by the CPU 301 (processor).

In addition, the program executed by the computer is recorded in and provided by a computer-readable recording medium such as a CD-ROM, a flexible disk, a CD-R, or a digital versatile disk (DVD) as a file in a format that can be installed or executed in the computer.

Moreover, the program may be stored on a computer connected to a network such as the Internet and provided by being downloaded via the network. Moreover, the program may be provided or distributed via a network such as the Internet. In addition, the program executed by the host unit 24 may be provided by being incorporated in the ROM 303 or the like in advance.

Moreover, the solver unit 22 is implemented by a reconfigurable semiconductor device such as a field-programmable gate array (FPGA). Moreover, the solver unit 22 may be implemented by an electronic circuit including a CPU, a microprocessor, a graphics processing unit (GPU), an application specific integrated circuit (ASIC), or circuits thereof. Moreover, the solver unit 22 may be implemented by an information processing device such as a computer, a computer system configured by a plurality of computers or servers communicating with each other via a network, a PC cluster in which a plurality of computers executes information processing in cooperation, or the like.

Moreover, in a case where the solver unit 22 is implemented by a reconfigurable semiconductor device such as an FPGA, circuit information (configuration data) written in the reconfigurable semiconductor device to operate the reconfigurable semiconductor device as the solver unit 22 may be stored on a computer connected to a network such as the Internet and provided by being downloaded via the network. In addition, circuit information (configuration data) written in the reconfigurable semiconductor device in order to operate the reconfigurable semiconductor device as the solver unit 22 may be recorded in a computer-readable recording medium and provided.

Moreover, in a case where the solver unit 22 is implemented by a semiconductor device such as an ASIC, circuit information representing a configuration of a circuit described in a hardware description language may be stored on a computer connected to a network such as the Internet and provided by being downloaded via the network in order to operate the semiconductor device such as an ASIC as the solver unit 22. Moreover, in order to operate a semiconductor device such as an ASIC as the solver unit 22, circuit information representing a configuration of a circuit described in a hardware description language may be recorded in a computer-readable recording medium and provided.

Note that the solver unit 22 may be incorporated in the host unit 24. For example, the solver unit 22 may be incorporated as an accelerator in part of the host unit 24. Moreover, the solver unit 22 may include some functions of the host unit 24, for example, the formulation unit 36 or the arbitration unit 38.

While certain embodiments have been described, these embodiments have been presented by way of example only, and are not intended to limit the scope of the inventions. Indeed, the novel embodiments described herein may be embodied in a variety of other forms; moreover, various omissions, substitutions and changes in the form of the embodiments described herein may be made without departing from the spirit of the inventions. The accompanying claims and their equivalents are intended to cover such forms or modifications as would fall within the scope and spirit of the inventions.

Supplement

The above-described embodiments can be summarized in the following technical schemes.

(Technical scheme 1)

An information processing device (14) executing processing on data, the information processing device (14) being configured to:

generate a combination optimization problem based on the data under a predetermined constraint condition;
solve the generated combination optimization problem while allowing the constraint condition not to be satisfied, and calculate a solution to the combination optimization problem obtained by solving the combination optimization problem;
generate a constraint violation control signal in a case where the solution does not satisfy the constraint condition;
execute first processing on the data, the first processing being predetermined on the basis of the constraint violation control signal; and
output the data on which the first processing has been executed.

(Technical scheme 2)

The information processing device (14) according to the technical scheme 1, wherein,

in the generation of the combination optimization problem, the information processing device is configured to generate the combination optimization problem to minimize a total cost function obtained by adding a cost function and a penalty function,
the cost function includes a plurality of decision variables corresponding to the data as arguments, the cost function being a linear or higher function of the decision variables, and
the penalty function includes at least some of the decision variables and has a minimum value when the solution satisfies the constraint condition.

(Technical scheme 3)

The information processing device (14) according to the technical scheme 2, wherein, in the generation of the constraint violation control signal, the information processing device is configured to

determine whether the solution to the solved combination optimization problem satisfies the constraint condition, and
output the constraint violation control signal in a case where the solution does not satisfy the constraint condition.

(Technical scheme 4)

The information processing device (14) according to the technical scheme 2, wherein

the constraint condition is represented by one or more constraint expressions, each being an equality expression or an inequality expression, and,

in the generation of the constraint violation control signal, the information processing device is configured to

determine whether the solution satisfies the one or more constraint expressions, and
output the constraint violation control signal in a case where the solution does not satisfy the one or more constraint expressions.

(Technical scheme 5)

The information processing device (14) according to the technical scheme 2, wherein

the constraint condition is represented by one or more constraint expressions, each being an equality expression or an inequality expression, and,
in the generation of the constraint violation control signal, the information processing device is configured to output the constraint violation control signal in a case where the solution does not satisfy the one or more constraint expressions and the number of constraint expressions in which the expressions are not satisfied among the one or more constraint expressions is equal to or less than a preset value.

(Technical scheme 6)

The information processing device (14) according to the technical scheme 2, wherein the information processing device is configured to output the constraint violation control signal in a case where a value obtained by substituting the solution into the penalty function is larger than the minimum value and less than or equal to a preset value.

(Technical scheme 7)

The information processing device (14) according to any one of the technical scheme 2 to 6, wherein the information processing device is further configured to, in a case where the solution satisfies the constraint condition,

execute second processing on the data, the second processing being predetermined on the basis of the solution, and
output the data on which the second processing has been executed.

(Technical scheme 8)

The information processing device (14) according to the technical scheme 7, wherein the information processing device is further configured to, in a case where the solution does not satisfy the constraint condition,

identify a constraint violation portion not satisfying the constraint condition in the solution and a constraint satisfaction portion satisfying the constraint condition in the solution,
output the constraint violation control signal based on the constraint violation portion and a constraint satisfaction control signal based on the constraint satisfaction portion,
execute the second processing on the data on the basis of the constraint satisfaction control signal, and
execute, on the basis of the constraint violation control signal, the first processing on data corresponding to the constraint violation portion in the data.

(Technical scheme 9)

The information processing device (14) according to the technical scheme 8, wherein the information processing device is configured to, in the identification of the constraint violation portion and the constraint satisfaction portion,

identify, on the basis of the acquired solution, a decision variable as a factor by which the constraint condition is not satisfied among the decision variables, and identify the constraint satisfaction portion by changing a value of the decision variable as a factor by which the constraint condition is not satisfied, and
extract a value of a decision variable as a factor by which the constraint condition is not satisfied, and identify the constraint violation portion.

(Technical scheme 10)

The information processing device (14) according to the technical scheme 8 or 9, wherein the information processing device is configured to,

in the generation of the combination optimization problem, generate a first combination optimization problem and a second combination optimization problem, the first combination optimization problem having a larger ratio of the penalty function to the cost function than the second combination optimization problem,
find the solution to each of the first combination optimization problem and the second combination optimization problem, and
in the identification of the constraint violation portion and the constraint satisfaction portion,

identify the solution to the first combination optimization problem as the constraint satisfaction portion, and identify the constraint violation portion on the basis of a difference between the solution to the first combination optimization problem and the solution to the second combination optimization problem.

(Technical scheme 11)

The information processing device (14) according to any one of the technical schemes 2 to 10, wherein the information processing device is configured to, in the generation of the combination optimization problem, change a ratio of the penalty function to the cost function in accordance with the data on which the combination optimization problem is based.

(Technical scheme 12)

The information processing device (14) according to any one of the technical schemes 1 to 11, wherein

the information processing device is a device configured to track an object included in image data on the basis of the image data,
the information processing device is further configured to:

store one or more pieces of tracked object information representing one or more tracked objects being tracked before a first time; and
acquire one or more pieces of detection object information at the first time, the one or more pieces of detection object information representing one or more detection objects included in the image data at the first time,

the information processing device is configured to, in the generation of the combination optimization problem under the constraint condition, generate the combination optimization problem that associates pieces of detection object information determined to represent a same object among the one or more pieces of detection object information at the first time with each of the one or more pieces of tracked object information at the first time,
the information processing device is configured to, in the executing of the first processing,

decrease an elapsed time after tracked object information identified based on the constraint violation control signal among the one or more pieces of tracked object information at the first time is added or corrected by a predetermined value, or
increase a threshold value for deleting tracked object information identified based on the constraint violation control signal when the elapsed time exceeds by a predetermined value, and

the information processing device is configured to, in the output of the data, output the one or more pieces of tracked object information at the first time.

(Technical scheme 13)

The information processing device (14) according to the technical scheme 12, wherein

the information processing device is configured to, in the generation of the constraint violation control signal, identify a constraint satisfaction portion satisfying the constraint condition in the solution and a constraint violation portion not satisfying the constraint condition in the solution, and generate a constraint satisfaction control signal indicating the constraint satisfaction portion and the constraint violation control signal indicating the constraint violation portion, and
the information processing device is further configured to:

correct, on the basis of the constraint satisfaction control signal, tracked object information associated with any of the one or more pieces of detection object information among the one or more pieces of tracked object information at the first time by the associated detection object information;

add, on the basis of the constraint satisfaction control signal, detection object information that is not associated with any of the one or more pieces of tracked object information among the one or more pieces of detection object information at the first time to the one or more pieces of tracked object information at the first time as new tracked object information; and

delete, on the basis of the constraint satisfaction control signal, tracked object information in which the elapsed time exceeds the threshold value among the one or more pieces of tracked object information at the first time.

(Technical scheme 14)

An information processing method implemented by a computer (14) for executing processing on data, the information processing method comprising:

generating a combination optimization problem based on the data under a predetermined constraint condition;
solving the generated combination optimization problem while allowing the constraint condition not to be satisfied, and calculate a solution to the combination optimization problem obtained by solving the combination optimization problem;
generating a constraint violation control signal in a case where the solution does not satisfy the constraint condition;
executing first processing on the data, the first processing being predetermined on the basis of the constraint violation control signal; and
outputting the data on which the first processing has been executed.

(Technical scheme 15)

A computer program comprising computer-readable instructions to be executed by a computer, the instructions causing the computer to perform processing of:

generating a combination optimization problem based on the data under a predetermined constraint condition;
solving the generated combination optimization problem while allowing the constraint condition not to be satisfied, and calculate a solution to the combination optimization problem obtained by solving the combination optimization problem;
generating a constraint violation control signal in a case where the solution does not satisfy the constraint condition;
executing first processing on the data, the first processing being predetermined on the basis of the constraint violation control signal; and
outputting the data on which the first processing has been executed.

**Claims**

1. An information processing device (14) executing processing on data, the information processing device (14) being configured to:

generate a combination optimization problem based on the data under a predetermined constraint condition;
solve the generated combination optimization problem while allowing the constraint condition not to be satisfied, and calculate a solution to the combination optimization problem obtained by solving the combination optimization problem;
generate a constraint violation control signal in a case where the solution does not satisfy the constraint condition;
execute first processing on the data, the first processing being predetermined on the basis of the constraint violation control signal; and
output the data on which the first processing has been executed.

2. The information processing device (14) according to claim 1, wherein,

in the generation of the combination optimization problem, the information processing device is configured to generate the combination optimization problem to minimize a total cost function obtained by adding a cost function and a penalty function,

the cost function includes a plurality of decision variables corresponding to the data as arguments, the cost function being a linear or higher function of the decision variables, and
the penalty function includes at least some of the decision variables and has a minimum value when the solution satisfies the constraint condition.

3. The information processing device (14) according to claim 2, wherein, in the generation of the constraint violation control signal, the information processing device is configured to

determine whether the solution to the solved combination optimization problem satisfies the constraint condition, and
output the constraint violation control signal in a case where the solution does not satisfy the constraint condition.

4. The information processing device (14) according to claim 2, wherein

the constraint condition is represented by one or more constraint expressions, each being an equality expression or an inequality expression, and,
in the generation of the constraint violation control signal, the information processing device is configured to

determine whether the solution satisfies the one or more constraint expressions, and
output the constraint violation control signal in a case where the solution does not satisfy the one or more constraint expressions.

5. The information processing device (14) according to claim 2, wherein

the constraint condition is represented by one or more constraint expressions, each being an equality expression or an inequality expression, and,
in the generation of the constraint violation control signal, the information processing device is configured to output the constraint violation control signal in a case where the solution does not satisfy the one or more constraint expressions and the number of constraint expressions in which the expressions are not satisfied among the one or more constraint expressions is equal to or less than a preset value.

6. The information processing device (14) according to claim 2, wherein the information processing device is configured to output the constraint violation control signal in a case where a value obtained by substituting the solution into the penalty function is larger than the minimum value and less than or equal to a preset value.

7. The information processing device (14) according to claim 2, wherein the information processing device is further configured to, in a case where the solution satisfies the constraint condition,

execute second processing on the data, the second processing being predetermined on the basis of the solution, and
output the data on which the second processing has been executed.

8. The information processing device (14) according to claim 7, wherein the information processing device is further configured to, in a case where the solution does not satisfy the constraint condition,

identify a constraint violation portion not satisfying the constraint condition in the solution and a constraint satisfaction portion satisfying the constraint condition in the solution,
output the constraint violation control signal based on the constraint violation portion and a constraint satisfaction control signal based on the constraint satisfaction portion,
execute the second processing on the data on the basis of the constraint satisfaction control signal, and
execute, on the basis of the constraint violation control signal, the first processing on data corresponding to the constraint violation portion in the data.

9. The information processing device (14) according to claim 8, wherein the information processing device is configured to, in the identification of the constraint violation portion and the constraint satisfaction portion,

identify, on the basis of the acquired solution, a decision variable as a factor by which the constraint condition is not satisfied among the decision variables, and identify the constraint satisfaction portion by changing a value of the decision variable as a factor by which the constraint condition is not satisfied, and

extract a value of a decision variable as a factor by which the constraint condition is not satisfied, and identify the constraint violation portion.

10. The information processing device (14) according to claim 8, wherein the information processing device is configured to,

in the generation of the combination optimization problem, generate a first combination optimization problem and a second combination optimization problem, the first combination optimization problem having a larger ratio of the penalty function to the cost function than the second combination optimization problem, find the solution to each of the first combination optimization problem and the second combination optimization problem, and
in the identification of the constraint violation portion and the constraint satisfaction portion,

identify the solution to the first combination optimization problem as the constraint satisfaction portion, and identify the constraint violation portion on the basis of a difference between the solution to the first combination optimization problem and the solution to the second combination optimization problem.

11. The information processing device (14) according to claim 2, wherein the information processing device is configured to, in the generation of the combination optimization problem, change a ratio of the penalty function to the cost function in accordance with the data on which the combination optimization problem is based.

12. The information processing device (14) according to claim 1, wherein

the information processing device is a device configured to track an object included in image data on the basis of the image data,
the information processing device is further configured to:

store one or more pieces of tracked object information representing one or more tracked objects being tracked before a first time; and
acquire one or more pieces of detection object information at the first time, the one or more pieces of detection object information representing one or more detection objects included in the image data at the first time,

the information processing device is configured to, in the generation of the combination optimization problem under the constraint condition, generate the combination optimization problem that associates pieces of detection object information determined to represent a same object among the one or more pieces of detection object information at the first time with each of the one or more pieces of tracked object information at the first time, the information processing device is configured to, in the executing of the first processing,

decrease an elapsed time after tracked object information identified based on the constraint violation control signal among the one or more pieces of tracked object information at the first time is added or corrected by a predetermined value, or
increase a threshold value for deleting tracked object information identified based on the constraint violation control signal when the elapsed time exceeds by a predetermined value, and

the information processing device is configured to, in the output of the data, output the one or more pieces of tracked object information at the first time.

13. The information processing device (14) according to claim 12, wherein

the information processing device is configured to, in the generation of the constraint violation control signal, identify a constraint satisfaction portion satisfying the constraint condition in the solution and a constraint violation portion not satisfying the constraint condition in the solution, and generate a constraint satisfaction control signal indicating the constraint satisfaction portion and the constraint violation control signal indicating the constraint violation portion, and
the information processing device is further configured to:

correct, on the basis of the constraint satisfaction control signal, tracked object information associated with any of the one or more pieces of detection object information among the one or more pieces of tracked object information at the first time by the associated detection object information;

add, on the basis of the constraint satisfaction control signal, detection object information that is not associated with any of the one or more pieces of tracked object information among the one or more pieces of detection object information at the first time to the one or more pieces of tracked object information at the first time as new tracked object information; and

delete, on the basis of the constraint satisfaction control signal, tracked object information in which the elapsed time exceeds the threshold value among the one or more pieces of tracked object information at the first time.

14. An information processing method implemented by a computer (14) for executing processing on data, the information processing method comprising:

generating a combination optimization problem based on the data under a predetermined constraint condition;

solving the generated combination optimization problem while allowing the constraint condition not to be satisfied, and calculate a solution to the combination optimization problem obtained by solving the combination optimization problem;

generating a constraint violation control signal in a case where the solution does not satisfy the constraint condition;

executing first processing on the data, the first processing being predetermined on the basis of the constraint violation control signal; and

outputting the data on which the first processing has been executed.

15. A computer program comprising computer-readable instructions to be executed by a computer, the instructions causing the computer to perform processing of:

generating a combination optimization problem based on the data under a predetermined constraint condition;

solving the generated combination optimization problem while allowing the constraint condition not to be satisfied, and calculate a solution to the combination optimization problem obtained by solving the combination optimization problem;

generating a constraint violation control signal in a case where the solution does not satisfy the constraint condition;

executing first processing on the data, the first processing being predetermined on the basis of the constraint violation control signal; and

outputting the data on which the first processing has been executed.

# FIG.1

N-size problem

# FIG.2

| N DECISION VARIABLES | 2×N INTERNAL VARIABLES |
|---|---|
| $s_1$ | $x_1$ ◯ ◯ $y_1$ |
| $s_2$ | $x_2$ ◯ ◯ $y_2$ |
| $s_3$ | $x_3$ ◯ ◯ $y_3$ |
| $s_4$ | $x_4$ ◯ ◯ $y_4$ |
| $s_5$ | $x_5$ ◯ ◯ $y_5$ |
| $s_6$ | $x_6$ ◯ ◯ $y_6$ |
| ⋮ | ⋮  ⋮ |
| $s_i$ | $x_i$ ◯ ◯ $y_i$ |
| ⋮ | ⋮  ⋮ |
| $s_N$ | $x_N$ ◯ ◯ $y_N$ |

# FIG.3

```
        ┌──────────────┐
        │    START     │
        └──────┬───────┘
               │
               ▼
        ┌──────────────────────┐
        │   ACQUIRE PROBLEM    │──── S11
        └──────┬───────────────┘
               │
               ▼
        ┌──────────────────────┐
        │ EXECUTE INITIALIZATION│──── S12
        └──────┬───────────────┘
               │
               ▼
        ┌──────────────────────┐
        │ EXECUTE REPEAT PROCESS│──── S13
        └──────┬───────────────┘
               │
               ▼
        ┌──────────────────────┐
        │ EXECUTE y UPDATE PROCESS│── S14
        └──────┬───────────────┘
               │
               ▼
        ┌──────────────────────┐
        │ EXECUTE x UPDATE PROCESS│── S15
        └──────┬───────────────┘
               │
               ▼
        ┌──────────────────────┐
        │ EXECUTE WALL PROCESS │──── S16
        └──────┬───────────────┘
               │
               ▼
        ┌──────────────────────┐
        │ EXECUTE REPEAT PROCESS│──── S17
        └──────┬───────────────┘
               │
               ▼
        ┌──────────────────────┐
        │       OUTPUT         │──── S18
        └──────┬───────────────┘
               │
               ▼
        ┌──────────────┐
        │     END      │
        └──────────────┘
```

# FIG.4

# FIG.5

# FIG.6

<u>10</u>

## FIG.7

14

SOLVER UNIT 22

COMBINATION OPTIMIZATION PROBLEM

SOLUTION

24

OBJECT TRACKING UNIT 30

DETECTION OBJECT INFORMATION (detections)

OBJECT DETECTION UNIT 26

IMAGE DATA 12

TRACKED OBJECT INFORMATION 16

TRACKED OBJECT INFORMATION (trackers)

STORAGE UNIT (INTERNAL STATE INFORMATION) 28

HOST UNIT

# FIG.8

SOLVER UNIT  22

52

ISING MACHINE

ISING PROBLEM

SOLU-TION

54  56

PRE-PROCESS-ING UNIT

POST-PROCESS-ING UNIT

30

EXCEPTION SIGNAL

50

EXCEPTION PROCESS-ING UNIT

COMBINATION OPTIMIZATION PROBLEM

SOLUTION

26  detections

32

ACQUISI-TION UNIT

36

FORMULA-TION UNIT

38

ARBITRA-TION UNIT

CONSTRAINT VIOLATION CONTROL SIGNAL

CONSTRAINT SATISFACTION CONTROL SIGNAL

potentially matched

48

OUTPUT UNIT

16

trackers

matched

unmatched detections

unmached trackers

34

PREDICTION UNIT

40

CORREC-TION UNIT

42

ADDITION UNIT

44

LIFE EXTENSION UNIT

46

DELETION UNIT

28

STORAGE UNIT

EP 4 386 583 A1

# FIG.9

DETECTION OBJECT INFORMATION
(detections)

$N_d$

| | $d_1$ | $d_2$ | $d_3$ | $d_4$ | $d_5$ |
|---|---|---|---|---|---|
| $t_1$ | $b_{1,1}$ | $b_{1,2}$ | $b_{1,3}$ | $b_{1,4}$ | $b_{1,5}$ |
| $t_2$ | $b_{2,1}$ | $b_{2,2}$ | $b_{2,3}$ | $b_{2,4}$ | $b_{2,5}$ |
| $t_3$ | $b_{3,1}$ | $b_{3,2}$ | $b_{3,3}$ | $b_{3,4}$ | $b_{3,5}$ |
| $t_4$ | $b_{4,1}$ | $b_{4,2}$ | $b_{4,3}$ | $b_{4,4}$ | $b_{4,5}$ |
| $t_5$ | $b_{5,1}$ | $b_{5,2}$ | $b_{5,3}$ | $b_{5,4}$ | $b_{5,5}$ |

TRACKED OBJECT INFORMATION (trackers) $N_t$

# FIG.10

DETECTION OBJECT INFORMATION
(detections)

$N_d$

| | $d_1$ | $d_2$ | $d_3$ | $d_4$ | $d_5$ |
|---|---|---|---|---|---|
| $t_1$ | IOU (1, 1) | IOU (1, 2) | IOU (1, 3) | IOU (1, 4) | IOU (1, 5) |
| $t_2$ | IOU (2, 1) | IOU (2, 2) | IOU (2, 3) | IOU (2, 4) | IOU (2, 5) |
| $t_3$ | IOU (3, 1) | IOU (3, 2) | IOU (3, 3) | IOU (3, 4) | IOU (3, 5) |
| $t_4$ | IOU (4, 1) | IOU (4, 2) | IOU (4, 3) | IOU (4, 4) | IOU (4, 5) |
| $t_5$ | IOU (5, 1) | IOU (5, 2) | IOU (5, 3) | IOU (5, 4) | IOU (5, 5) |

TRACKED OBJECT INFORMATION (trackers) $N_t$

# FIG.11

SET OF POSSIBLE SOLUTIONS

SET OF SOLUTIONS SATISFYING
CONSTRAINT CONDITION

# FIG.12

START

EVERY FRAME
(AT REGULAR TIME INTERVALS) — S31

DETECT OBJECT — S32

PREDICT — S33

GENERATE PROBLEM — S34

SOLVE — S35

PERFORM ARBITRATION PROCESS — S36

CORRECT — S37

ADD — S38

EXTEND LIFE — S39

DELETE — S40

OUTPUT — S41

END FOR FRAME — S42

END

FIG.13

# FIG.14

```
          ┌──────────────┐
          │    START     │
          └──────┬───────┘
                 │
          ┌──────▼───────┐
          │ ACQUIRE SOLUTION │ ∽S51
          └──────┬───────┘
                 │
          ┌──────▼───────┐
          │ EVALUATE SOLUTION │ ∽S52
          └──────┬───────┘
                 │
                S53
           ╱───────────╲
   YES    ╱     IS       ╲
 ◄────────   CONSTRAINT   
           ╲  CONDITION  ╱
            ╲ SATISFIED?╱
             ╲─────────╱
                 │ NO
   S54           │
┌────────────┐   │
│  OUTPUT    │   │
│ CONSTRAINT │   │        S55
│SATISFACTION│   ╱──────────╲      NO
│  CONTROL   │  ╱    VALID    ╲ ─────────► EXCEPTION
│  SIGNAL    │     CONSTRAINT              PROCESS
└─────┬──────┘  ╲  VIOLATION  ╱
      │          ╲ SOLUTION? ╱
      │           ╲─────────╱
      │               │ YES
      │        ┌───────▼────────┐
      │        │ IDENTIFY       │
      │        │ CONSTRAINT     │
      │        │ SATISFACTION   │ ∽S56
      │        │ PORTION AND    │
      │        │ CONSTRAINT     │
      │        │ VIOLATION      │
      │        │ PORTION        │
      │        └───────┬────────┘
      │        ┌───────▼────────┐
      │        │ OUTPUT         │
      │        │ CONSTRAINT     │
      │        │ SATISFACTION   │ ∽S57
      │        │ CONTROL SIGNAL │
      │        │ AND CONSTRAINT │
      │        │ VIOLATION      │
      │        │ CONTROL SIGNAL │
      │        └───────┬────────┘
      │                │
      └────────────────┤
                 ┌──────▼───────┐
                 │     END      │
                 └──────────────┘
```

44

# FIG.15

DETECTION OBJECT INFORMATION
(detections)

TRACKED OBJECT INFORMATION (trackers)

$N_d$

| | $d_1$ | $d_2$ | $d_3$ | $d_4$ | $d_5$ | $S_R$ |
|---|---|---|---|---|---|---|
| $t_1$ | 0 | 0 | 1 | 0 | 0 | 1 |
| $t_2$ | 0 | 0 | 0 | 1 | 0 | 1 |
| $t_3$ | 1 | 0 | 0 | 0 | 0 | 1 |
| $t_4$ | 0 | 1 | 0 | 0 | 0 | 1 |
| $t_5$ | 0 | 0 | 0 | 0 | 1 | 1 |
| $S_C$ | 1 | 1 | 1 | 1 | 1 | |

(k-1)-th FRAME

BOUNDARY BOX IN DETECTION OBJECT INFORMATION

BOUNDARY BOX IN TRACKED OBJECT INFORMATION

# FIG.16

DETECTION OBJECT INFORMATION
(detections)

TRACKED OBJECT INFORMATION (trackers)

$N_d$

| | $d_1$ | $d_2$ | $d_3$ | $d_4$ | | $S_R$ |
|---|---|---|---|---|---|---|
| $t_1$ | 0 | 0 | 1 | 0 | | 1 |
| $t_2$ | 0 | 0 | 0 | 1 | | 1 |
| $t_3$ | 1 | 0 | 0 | 0 | | 1 |
| $t_4$ | 0 | 1 | 0 | 0 | | 1 |
| $t_5$ | 0 | 0 | 0 | 1 | | 1 |
| $S_C$ | 1 | 1 | 1 | 2 | | |

(k)-th FRAME

BOUNDARY BOX IN DETECTION OBJECT INFORMATION

BOUNDARY BOX IN TRACKED OBJECT INFORMATION

# FIG.17

DETECTION OBJECT INFORMATION
(detections)

$N_d$

| | $d_1$ | $d_2$ | $d_3$ | $d_4$ | $d_5$ | $S_R$ |
|---|---|---|---|---|---|---|
| $t_1$ | 0 | 0 | 1 | 0 | 0 | 1 |
| $t_2$ | 0 | 0 | 0 | 1 | 0 | 1 |
| $t_3$ | 1 | 0 | 0 | 0 | 0 | 1 |
| $t_4$ | 0 | 1 | 0 | 0 | 0 | 1 |
| $t_5$ | 0 | 0 | 0 | 0 | 1 | 1 |
| $S_C$ | 1 | 1 | 1 | 1 | 1 | |

TRACKED OBJECT INFORMATION (trackers) · $N_t$

(k+1)-th FRAME

BOUNDARY BOX IN DETECTION OBJECT INFORMATION

BOUNDARY BOX IN TRACKED OBJECT INFORMATION

# FIG.18

DETECTION OBJECT INFORMATION
(detections)

$N_d$

| | $d_1$ | $d_2$ | $d_3$ | $d_4$ | | $S_R$ |
|---|---|---|---|---|---|---|
| $t_1$ | 0 | 0 | 1 | 0 | | 1 |
| $t_2$ | 0 | 0 | 0 | 1 | | 1 |
| $t_3$ | 1 | 0 | 0 | 0 | | 1 |
| $t_4$ | 0 | 1 | 0 | 0 | | 1 |
| $t_5$ | 0 | 0 | 0 | 0 | | 0 |
| $S_C$ | 1 | 1 | 1 | 1 | | |

TRACKED OBJECT INFORMATION (trackers) · $N_t$

(k)-th FRAME

# FIG.19

```
        ┌──────────────┐
        │    START     │
        └──────┬───────┘
               │
               ▼          ⌐S61
          ╱─────────╲
         ╱           ╲      NO
        ╱   Nd<Nt     ╲─────────┐
        ╲             ╱         │
         ╲           ╱          │
          ╲─────────╱           │
               │ YES            │
               ▼        ⌐S62    │
        ┌──────────────┐        │
        │ DECREASE C2  │        │
        └──────┬───────┘        │
               ▼◄───────────────┘
        ┌──────────────┐
        │     END      │
        └──────────────┘
```

# FIG.20

```
              ┌─────────────┐
              │    START    │
              └─────────────┘
                     │
                     ▼
      ┌──────────────────────────┐
      │ ACQUIRE SOLUTION TO      │
      │ FIRST COMBINATION        │──S71
      │ OPTIMIZATION PROBLEM     │
      │ (C₂=STANDARD VALUE)      │
      └──────────────────────────┘
                     │
                     ▼
      ┌──────────────────────────┐
      │    EVALUATE SOLUTION     │──S72
      └──────────────────────────┘
                     │
                     ▼   ┌─S73
                  ╱IS    ╲
                 ╱CONSTRAINT╲    NO
                ◆ CONDITION  ◆─────────► EXCEPTION
                 ╲SATISFIED?╱             PROCESS
                  ╲       ╱
                     │ YES
                     ▼
      ┌──────────────────────────┐
      │ ACQUIRE SOLUTION TO      │
      │ SECOND COMBINATION       │──S74
      │ OPTIMIZATION PROBLEM     │
      │ (C₂=RELAXATION VALUE)    │
      └──────────────────────────┘
                     │
                     ▼
      ┌──────────────────────────┐
      │    EVALUATE SOLUTION     │──S75
      └──────────────────────────┘
                     │
                     ▼   ┌─S76
    YES           ╱IS    ╲
EXCEPTION ◄──────◆CONSTRAINT◆
PROCESS          ╲CONDITION ╱
                  ╲SATISFIED?╱
                     │ NO
                     ▼   ┌─S78
                  ╱VALID  ╲    NO
                 ◆CONSTRAINT◆────────► EXCEPTION
                  ╲VIOLATION╱            PROCESS
                  ╲SOLUTION?╱
                     │ YES
                     ▼
      ┌──────────────────────────┐
      │ EXECUTE DIFFERENCE       │
      │ CALCULATION              │──S79
      │ (IDENTIFY CONSTRAINT     │
      │ VIOLATION PORTION)       │
      └──────────────────────────┘
                     │
                     ▼
      ┌──────────────────────────┐
      │ OUTPUT CONSTRAINT        │
      │ SATISFACTION CONTROL     │──S80
      │ SIGNAL AND CONSTRAINT    │
      │ VIOLATION CONTROL SIGNAL │
      └──────────────────────────┘
                     │
                     ▼
              ┌─────────────┐
              │     END     │
              └─────────────┘
```

$C_2$=STANDARD VALUE (S71)

$C_2$=RELAXATION VALUE (S74)

# FIG.21

|  |  | $N_d$ | | | |  | |
|---|---|---|---|---|---|---|---|
|  |  | $d_1$ | $d_2$ | $d_3$ |  | $S_R$ |
| $t_1$ |  | 0 | 1 | 0 |  | 1 |
| $t_2$ |  | 0 | 0 | 1 |  | 1 |
| $t_3$ |  | 0 | 0 | 0 |  | 1 |
| $t_4$ |  | 1 | 0 | 0 |  | 1 |
| $t_5$ |  | 0 | 0 | 0 |  | 0 |
| $S_C$ |  | 1 | 1 | 1 |  |  |

# FIG.22

|  |  | $N_d$ | | | |  | |
|---|---|---|---|---|---|---|---|
|  |  | $d_1$ | $d_2$ | $d_3$ |  | $S_R$ |
| $t_1$ |  | 0 | 1 | 0 |  | 1 |
| $t_2$ |  | 0 | 0 | 1 |  | 1 |
| $t_3$ |  | 0 | 1 | 0 |  | 1 |
| $t_4$ |  | 1 | 0 | 0 |  | 1 |
| $t_5$ |  | 0 | 0 | 1 |  | 1 |
| $S_C$ |  | 1 | 2 | 2 |  |  |

# FIG.23

# FIG.24

Europäisches
Patentamt
European
Patent Office
Office européen
des brevets

# EUROPEAN SEARCH REPORT

Application Number

EP 23 19 4056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZAECH JAN-NICO ET AL: "Adiabatic Quantum Computing for Multi Object Tracking", 2022 IEEE/CVF CONFERENCE ON COMPUTER VISION AND PATTERN RECOGNITION (CVPR), IEEE, 18 June 2022 (2022-06-18), pages 8801-8812, XP034196039, DOI: 10.1109/CVPR52688.2022.00861 [retrieved on 2022-09-27] * sections 1 and 4; figure 1 * | 1-15 | INV. G06F17/11 G06Q10/04 G06T7/00 |
| A | TATSUMURA KOSUKE KOSUKE TATSUMURA@TOSHIBA CO JP: "Large-scale combinatorial optimization in real-time systems by FPGA-based accelerators for simulated bifurcation", PROCEEDINGS OF THE 11TH INTERNATIONAL SYMPOSIUM ON HIGHLY EFFICIENT ACCELERATORS AND RECONFIGURABLE TECHNOLOGIES, ACMPUB27, NEW YORK, NY, USA, 21 June 2021 (2021-06-21), pages 1-6, XP058592546, DOI: 10.1145/3468044.3468045 ISBN: 978-1-4503-8549-7 * section 2 * | 1-15 | TECHNICAL FIELDS SEARCHED (IPC) G06F G06T G06Q |

The present search report has been drawn up for all claims

| Place of search | Date of completion of the search | Examiner |
|---|---|---|
| Berlin | 21 February 2024 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019159566 A
- JP 2021043667 A
- JP 2021043589 A
- JP 2021060864 A

**Non-patent literature cited in the description**

- **HAYATO GOTO ; KOSUKE TATSUMURA ; ALEXANDER R. DIXON.** Combinatorial optimization by simulating adiabatic bifurcations in nonlinear Hamiltonian systems. *Science Advances,* 2019, vol. 5, 2372
- **HAYATO GOTO ; KOTARO ENDO ; MASARU SUZUKI ; YOSHISATO SAKAI ; TARO KANAO ; YOHEI HAMAKAWA ; RYO HIDAKA ; MASAYA YAMASAKI ; KOSUKE TATSUMURA.** High-performance combinatorial optimization based on classical mechanics. *Science Advances,* 2021, vol. 7, 7953
- **JOSEPH REDMON ; SANTOSH DIVVALA ; ROSS GIRSHICK ; ALI FARHADI.** You Only Look Once: Unified, Real-Time Object Detection. *Proceedings of the IEEE Conference on Computer Vision and Pattern Recognition (CVPR),* 2016, 779-788
- SSD: Single Shot MultiBox Detector. **WEI LIU et al.** 2016, ECCV 2016, Part I, LNCS. Springer International Publishing AG, 2016, vol. 9905, 21-37